(19) Europäisches Patentamt
European Patent Office
Office européen des brevets

(11) EP 3 835 061 A1

(12) EUROPEAN PATENT APPLICATION
published in accordance with Art. 153(4) EPC

(43) Date of publication:
16.06.2021 Bulletin 2021/24

(21) Application number: 20851679.9

(22) Date of filing: 22.06.2020

(51) Int Cl.:
B32B 27/18 (2006.01) B32B 27/32 (2006.01)
C08K 5/07 (2006.01) C08K 5/134 (2006.01)
C08K 5/3435 (2006.01) C08K 5/3475 (2006.01)
C08K 5/3492 (2006.01) C08L 23/04 (2006.01)
C08L 101/00 (2006.01) A01G 9/14 (2006.01)
A01G 13/02 (2006.01)

(86) International application number:
PCT/JP2020/024390

(87) International publication number:
WO 2021/029144 (18.02.2021 Gazette 2021/07)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 09.08.2019 JP 2019147141

(71) Applicant: ADEKA CORPORATION
Arakawa-ku
Tokyo
116-8554 (JP)

(72) Inventors:
- AYABE Takashi
Saitama-shi, Saitama 336-0022 (JP)
- MIYAMURA Daichi
Saitama-shi, Saitama 336-0022 (JP)

(74) Representative: Müller-Boré & Partner
Patentanwälte PartG mbB
Friedenheimer Brücke 21
80639 München (DE)

# (54) FILM FOR AGRICULTURAL USE, RESIN COMPOSITION FOR FORMING FILM FOR AGRICULTURAL USE, AND METHOD FOR GROWING PLANT USING SAME

(57) The agricultural film of the present invention is an agricultural film for use in sulfur fumigation or sulfur spraying, including a weather resistant layer containing a predetermined hindered amine light stabilizer, a predetermined benzoate compound, a predetermined ultraviolet absorber, and a thermoplastic resin, in which X and Y satisfy 1.5/8.5 ≤ X/Y ≤ 9.5/0.5, in a case where the content of the hindered amine light stabilizer is defined as X and the content of the benzoate compound is defined as Y.

Fig.1(A)

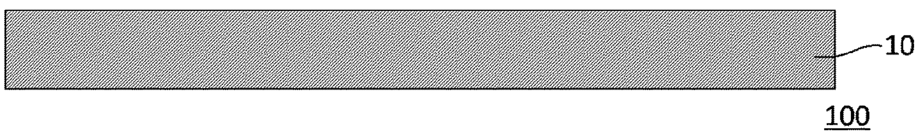


Fig.1(B)

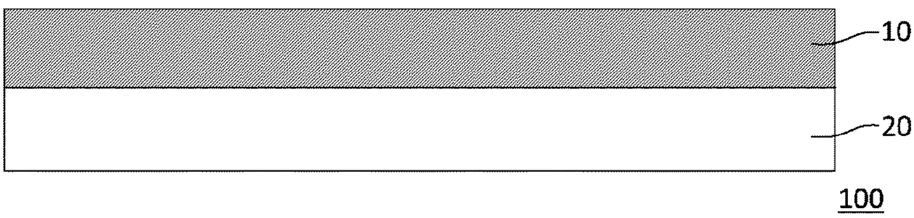


EP 3 835 061 A1

## Description

TECHNICAL FIELD

The present invention relates to an agricultural film, a resin composition for forming an agricultural film, and a plant growing method using the same.

BACKGROUND ART

Various developments have been made so far for an agricultural film. For example, a technique described in Patent Document 1 is known as this type of technique. Patent Document 1 discloses an agricultural film containing a hindered amine light stabilizer (such as claim 4 of Patent Document 1).

RELATED DOCUMENT

PATENT DOCUMENT

[Patent Document 1] Japanese Unexamined Patent Publication No. 2015-198579

SUMMARY OF THE INVENTION

However, as a result of study conducted by the present inventors, it has been found for the agricultural film disclosed in Patent Document 1 above that there is room for improvement in terms of long-term weather resistance and transparency.

As a method for improving the weather resistance of an agricultural film, a method using a hindered amine light stabilizer and an ultraviolet absorber is generally known.

Such an agricultural film is used for various applications, one of which is a sulfur fumigation method or a sulfur spraying method. The sulfur fumigation method of fumigating sulfur in a vinyl greenhouse or the method of spraying a chemical solution containing sulfur such as a sulfur flowable agent is one of the methods for growing a plant (agricultural crop) and is intended to prevent diseases of plants.

However, sulfur contained in the fumigation or chemical solution may reduce long-term weather resistance of agricultural films containing the hindered amine light stabilizer and the ultraviolet absorber.

Although the detailed mechanism for such an effect is not clear, it is considered that the sulfur adhering to or transferred into the agricultural film is oxidized to be acidified and forms a salt with the hindered amine light stabilizer to deactivate the function of the light stabilizer, so weather resistance cannot be maintained. In addition, such a phenomenon of deterioration of weather resistance is remarkably observed in a case where sulfur fumigation is carried out in the greenhouse.

As a result of extensive studies in view of such circumstances, the present inventors have found that combined use of a predetermined hindered amine light stabilizer and a predetermined benzoate compound as a synergist thereof suppresses deterioration of long-term weather resistance in an agricultural film provided with a layer containing these compounds.

Although a detailed mechanism for such an effect is not clear, it is considered that the predetermined benzoate compound suppresses the salt formation between sulfur and the predetermined hindered amine light stabilizer, which thus can suppress the incorporation or absorption of sulfur in the agricultural film.

On the other hand, increasing the content ratio of the benzoate compound may reduce the transparency of the agricultural film.

As a result of extensive studies based on the obtained findings, the present inventors have found that the long-term weather resistance and transparency in the agricultural film can be improved by appropriately controlling the content ratio of the hindered amine light stabilizer and the benzoate compound in the agricultural film.

From the above, it was found that, by setting the content ratio of the hindered amine light stabilizer and the benzoate compound to a predetermined value or more, the long-term weather resistance of the agricultural film in a case of being used for sulfur fumigation or sulfur spraying is increased, and by setting the content ratio of the hindered amine light stabilizer and the benzoate compound to a predetermined value or less, the transparency of the agricultural film is increased. The present invention has been completed based on these findings.

According to the present invention, there is provided
an agricultural film for use in sulfur fumigation or sulfur spraying, the agricultural film including a weather resistant layer containing:

one or two or more hindered amine light stabilizers selected from the group consisting of a compound represented by General Formula (A1) and a compound represented by General Formula (A2),
one or two or more benzoate compounds selected from compounds represented by General Formula (B),
an ultraviolet absorber including one or two or more selected from the group consisting of a benzophenone-based ultraviolet absorber, a benzotriazole-based ultraviolet absorber, and a triazine-based ultraviolet absorber, and
a thermoplastic resin,
in which X and Y satisfy 1.5/8.5 ≤ X/Y ≤ 9.5/0.5, in a case where a content of the hindered amine light stabilizer in terms of mass in the weather resistant layer is defined as X and a content of the benzoate compound in terms of mass in the weather resistant layer is defined as Y.

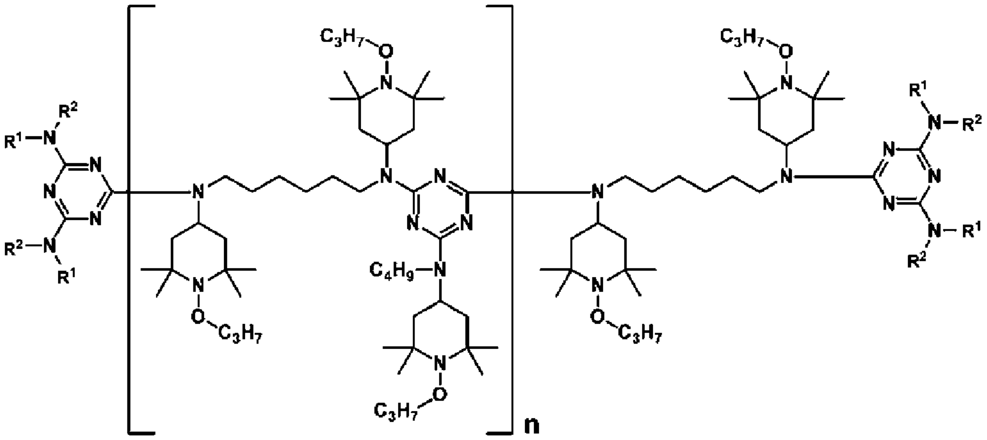
(A1)

(in General Formula (A1), $R^1$ and $R^2$ may be the same or different from each other and each independently represent an alkyl group having 1 to 8 carbon atoms or a 1-(n-propoxy)-2,2,6,6-tetramethylpiperidin-4-yl group, and in General Formula (A1), n is an integer of zero or more),

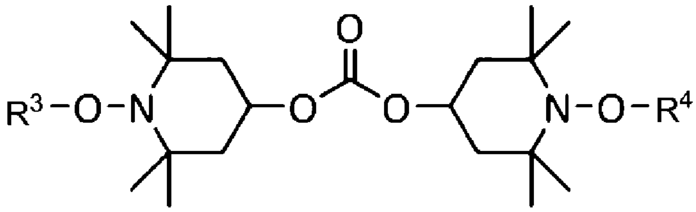
(A2)

(in General Formula (A2), $R^3$ and $R^4$ may be the same or different from each other and each independently represent an alkyl group having 1 to 20 carbon atoms),

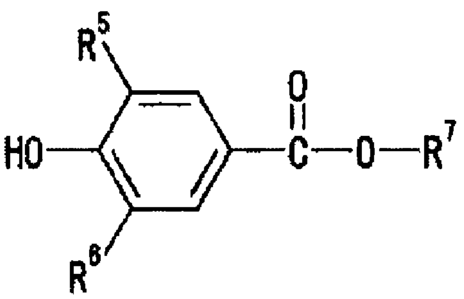
(B)

(in General Formula (B), $R^5$ and $R^6$ may be the same or different from each other and each independently represent an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms)

In addition, according to the present invention, there is provided a resin composition for forming an agricultural film, which is used for forming the agricultural film.

In addition, according to the present invention, there is provided a method for growing a plant, including:

a step of disposing the agricultural film in a greenhouse;
a step of disposing a plant in the greenhouse; and
a step of carrying out sulfur fumigation in the greenhouse.

According to the present invention, there are provided an agricultural film having excellent long-term weather resistance and excellent transparency; a resin composition for forming an agricultural film, which is used for forming the agricultural film; and a method for growing a plant using the same.

BRIEF DESCRIPTION OF THE DRAWINGS

Figs. 1(A) and 1(B) are cross-sectional diagrams showing an example of a configuration of an agricultural film of the present embodiment.
Fig. 2 is a diagram for illustrating an outline of fumigation equipment used for a sulfur fumigation treatment.

DESCRIPTION OF EMBODIMENTS

Hereinafter, embodiments of the present invention will be described with reference to the accompanying drawings. In all the drawings, the same constituent elements will be given the same reference numeral, and the description thereof will not be repeated. In addition, the figure is a schematic diagram and does not match an actual dimensional ratio.
In the present embodiment, description will be given by defining the front, rear, left, right, upper, and lower directions as shown in the figure. However, this is provided for the sake of convenience in order to simply describe a relative relationship of the constituent elements. Therefore, it does not limit the direction in which a product embodying the present invention is produced or used.
The agricultural film of the present embodiment will be outlined.
The agricultural film of the present embodiment includes a hindered amine light stabilizer, a benzoate compound, an ultraviolet absorber, and a thermoplastic resin.
The hindered amine light stabilizer includes one or two or more selected from the group consisting of a compound represented by General Formula (A1) and a compound represented by General Formula (A2) .
The benzoate compound includes one or two or more selected from compounds represented by General Formula (B).
The ultraviolet absorber includes one or two or more selected from the group consisting of a benzophenone-based ultraviolet absorber, a benzotriazole-based ultraviolet absorber, and a triazine-based ultraviolet absorber.
The agricultural film including such components have a weather resistant layer which is configured such that X and Y satisfy $1.5/8.5 \leq X/Y \leq 9.5/0.5$, in a case where the content of the hindered amine light stabilizer in terms of mass is defined as X and the content of the benzoate compound in terms of mass is defined as Y.
According to the findings of the present inventors, it was demonstrated that the weather resistance of the agricultural film can be enhanced by using a predetermined hindered amine light stabilizer and a predetermined ultraviolet absorber; the long-term weather resistance of the agricultural film can be enhanced even in a case of being used for sulfur fumigation or sulfur spraying, by setting the content ratio of the predetermined hindered amine light stabilizer and the predetermined benzoate compound to the above-mentioned lower limit value or more; and the transparency of the agricultural film can be enhanced by setting the content ratio of the predetermined hindered amine light stabilizer and the predetermined benzoate compound to the above-mentioned upper limit value or less.
According to the present embodiment, it is possible to realize an agricultural film having excellent transparency, in which deterioration in long-term weather resistance is suppressed even in a case of being used for sulfur fumigation or sulfur spraying.
Hereinafter, the agricultural film of the present embodiment will be described in detail.
The agricultural film has a weather resistant layer including a hindered amine light stabilizer, a benzoate compound, an ultraviolet absorber, and a thermoplastic resin.
The weather resistant layer includes one or two or more selected from the group consisting of a compound represented by General Formula (A1) and a compound represented by General Formula (A2).

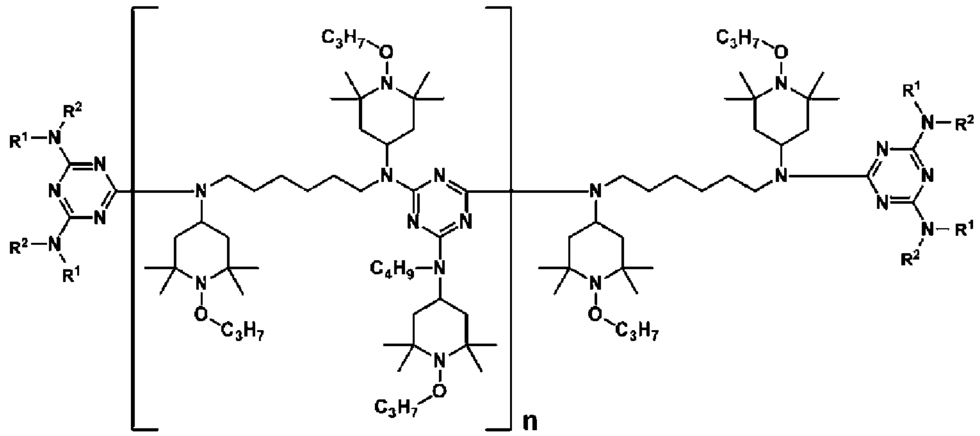

(A1)

In General Formula (A1), $R^1$ and $R^2$ may be the same or different from each other and each independently represent an alkyl group having 1 to 8 carbon atoms or a 1-(n-propoxy)-2,2,6,6-tetramethylpiperidin-4-yl group.

In General Formula (A1), n is an integer of zero or more. The value of n may be, for example, 0 to 10, and may be 0 to 6 . The hindered amine light stabilizer may include one or two or more compounds having different n values and represented by General Formula (A1) . Examples of the alkyl group having 1 to 8 carbon atoms, which is represented by $R^1$ and $R^2$, include methyl, ethyl, propyl, isopropyl, butyl, sec-butyl, tert-butyl, pentyl, tert-pentyl, hexyl, heptyl, octyl, and 1,1,3,3-tetramethylbutyl. Among these, propyl, isopropyl, butyl, sec-butyl, or tert-butyl is preferable, and butyl is particularly preferable.

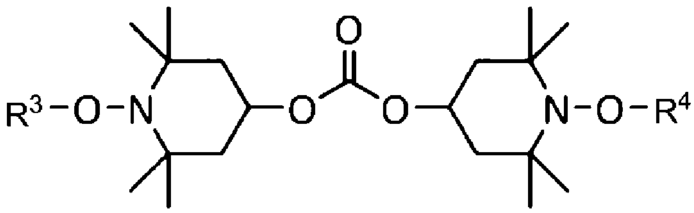

(A2)

In General Formula (A2), $R^3$ and $R^4$ may be the same or different from each other and each independently represent an alkyl group having 1 to 20 carbon atoms. Examples of the alkyl group having 1 to 20 carbon atoms, which is represented by $R^3$ and $R^4$, include methyl, ethyl, propyl, butyl, pentyl, hexyl, heptyl, octyl, 2-ethylhexyl, nonyl, decyl, undecyl, dodecyl, tridecyl, tetradecyl, pentadecyl, hexadecyl, heptadecyl, and octadecyl. Among these, octyl, 2-ethylhexyl, nonyl, decyl, undecyl, dodecyl, tridecyl, tetradecyl, pentadecyl, hexadecyl, heptadecyl, or octadecyl is preferable, octyl, 2-ethylhexyl, nonyl, decyl, undecyl, dodecyl, tridecyl, or tetradecyl is more preferable, and undecyl is particularly preferable.

An example of the hindered amine light stabilizer may include one or two or more selected from the group consisting of a compound A1, a compound A2, and a compound A3 as shown below.

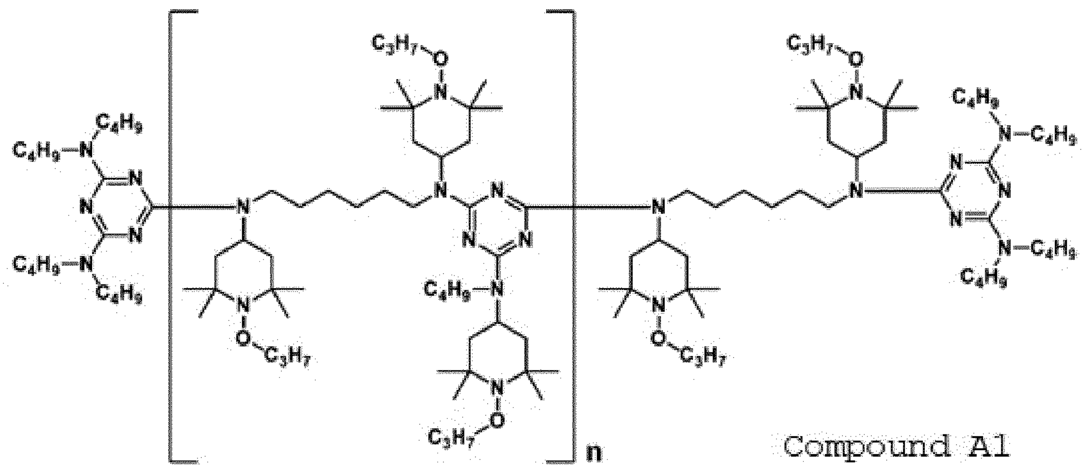

Compound A1

In the compound A1, n is an integer of zero or more. The value of n may be, for example, 0 to 10, and may be 0 to 6. The hindered amine light stabilizer may include one or two or more compounds A1 having different n values.

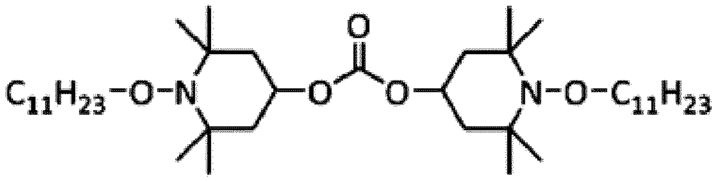

Compound A2

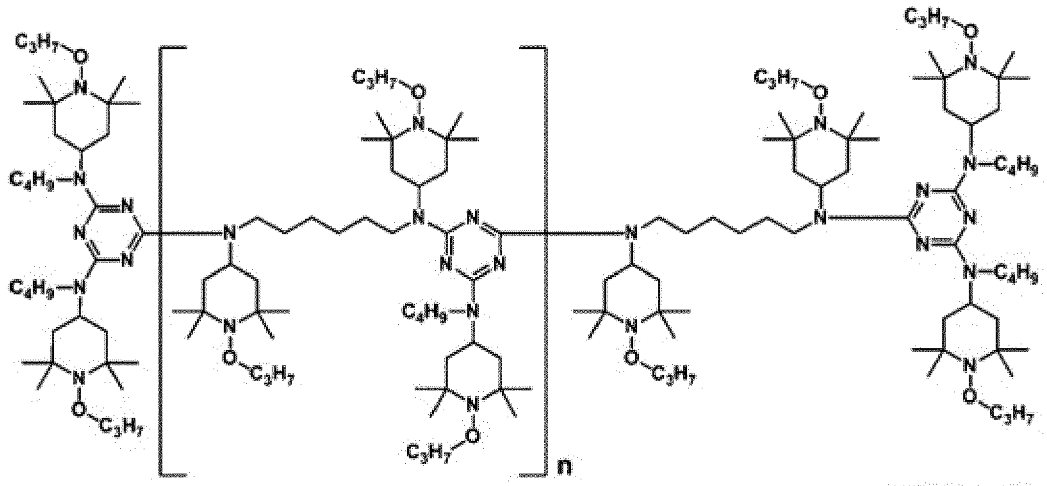

Compound A3

In the compound A3, n is an integer of zero or more. The value of n may be, for example, 0 to 10, and may be 0 to 6. The hindered amine light stabilizer may include one or two or more compounds A3 having different n values.

The weather resistant layer includes one or two or more benzoate compounds selected from the compounds represented by General Formula (B) as a synergist of the hindered amine light stabilizer.

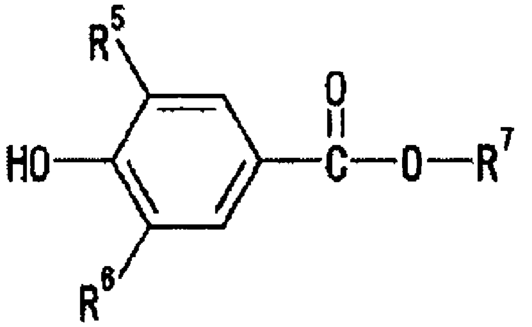

(B)

In General Formula (B), $R^5$ and $R^6$ may be the same or different from each other and each independently represent an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms.

Examples of the alkyl group having 1 to 8 carbon atoms, which is represented by $R^5$ and $R^6$, include methyl, ethyl, propyl, isopropyl, butyl, sec-butyl, tert-butyl, pentyl, tert-pentyl, hexyl, heptyl, octyl, and 1,1,3,3-tetramethylbutyl. Among these, isopropyl, sec-butyl, tert-butyl, tert-pentyl, or 1,1,3,3-tetramethylbutyl is preferable, and tert-butyl or tert-pentyl is more preferable.

Examples of the alkyl group having 1 to 30 carbon atoms, which is represented by $R^7$, include methyl, ethyl, propyl, butyl, pentyl, hexyl, heptyl, octyl, 2-ethylhexyl, nonyl, decyl, undecyl, dodecyl, tridecyl, tetradecyl, pentadecyl, hexadecyl, heptadecyl, and octadecyl. Among these, octyl, 2-ethylhexyl, nonyl, decyl, undecyl, dodecyl, tridecyl, tetradecyl, pentadecyl, hexadecyl, heptadecyl, or octadecyl is preferable, and dodecyl, tridecyl, tetradecyl, pentadecyl, hexadecyl, heptadecyl, or octadecyl is more preferable.

The aryl group represented by $R^7$ may be, for example, phenyl.

Examples of the alkylaryl group represented by $R^7$ include methylphenyl, butylphenyl, 2,4-di-tert-butylphenyl, 2,4-di-tert-amylphenyl, 2,4-dicumylphenyl, and 2,4-di-tert-butyl-5-methylphenyl. Among these, 2,4-di-tert-butylphenyl, 2,4-di-tert-amylphenyl, 2,4-dicumylphenyl, or 2,4-di-tert-butyl-5-methylphenyl is preferable, 2,4-di-tert-butylphenyl or 2,4-di-tert-amylphenyl is more preferable, and 2,4-di-tert-butylphenyl is particularly preferable.

In addition, $R^7$ in General Formula (B) may be an arylalkyl group having 7 to 30 carbon atoms, specifically, an arylalkyl group such as phenylmethyl.

Examples of the benzoate compound represented by General Formula (B) include the following compound Nos. 7 to 15. These compounds may be used alone or in combination of two or more thereof.

However, the benzoate compound represented by General Formula (B) is not limited to the following compounds.

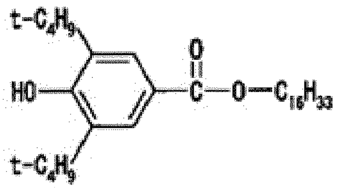

Compound No. 7

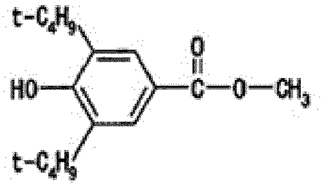

Compound No. 8

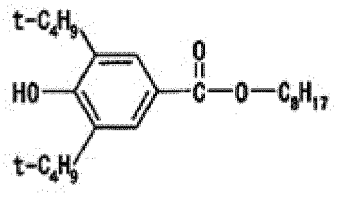

Compound No. 9

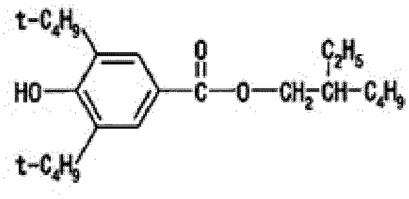

Compound No. 10

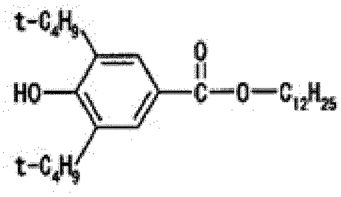

Compound No. 11

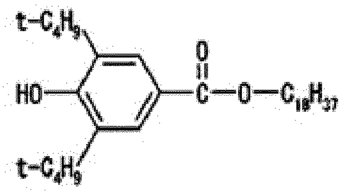

Compound No. 12

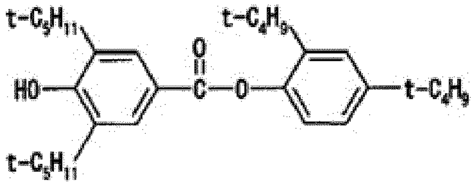

Compound No. 15

The benzoate compound represented by General Formula (B) may include at least one of the following compound B1 or compound B2. These compounds may be used alone or in combination of two or more thereof.

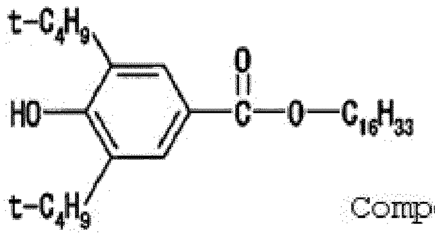

Compound B1

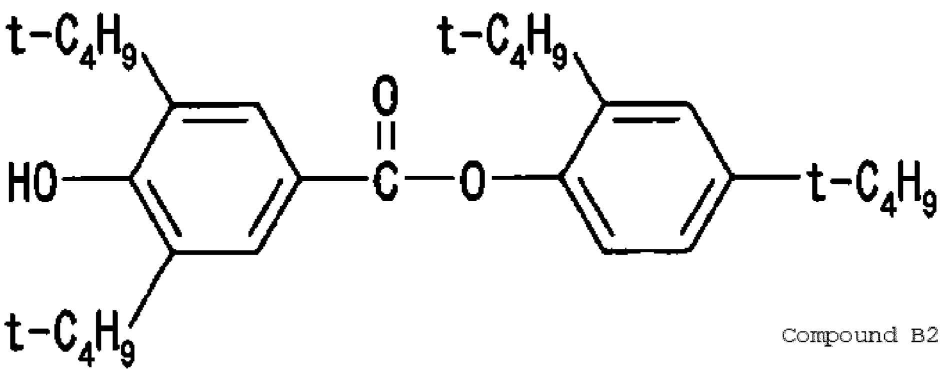

Compound B2

The weather resistant layer of the agricultural film includes a thermoplastic resin.

Examples of the thermoplastic resin include thermoplastic resins, such as polyolefins or copolymers thereof, including α-olefin polymers such as polypropylene, high density polyethylene, low density polyethylene, linear low density polyethylene, polybutene-1, and poly-4-methylpentene, ethylene-vinyl acetate copolymers, ethylene-vinyl alcohol copolymers, ethylene-acrylic acid ester copolymers, and ethylene-propylene copolymers; halogen-containing resins such as polyvinyl chloride, polyvinylidene chloride, chlorinated polyethylene, chlorinated polypropylene, polyvinylidene fluoride, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic acid ester copolymers, vinyl chloride-maleic acid ester copolymers, and vinyl chloride-cyclohexyl maleimide copolymers; petroleum resins; coumarone resins; polystyrene; polyvinyl acetate; acrylic resins; copolymers of either or both of styrene and α-methylstyrene with other monomer(s), (for example, maleic anhydride, phenylmaleimide, methyl methacrylate, butadiene, and acrylonitrile), such as AS resins, ABS resins, MBS resins, and heat resistant ABS resins; polymethyl methacrylate; polyvinyl alcohols; polyvinyl formal; polyvinyl butyral; linear polyesters such as polyethylene terephthalate and polytetramethylene terephthalate; polyphenylene oxide; polyamides such as polycaprolactam and polyhexamethylene adipamide; polycarbonate; branched polycarbonate; polyacetal; polyphenylene sulfide; polyurethane; and cellulosic resins; and mixtures thereof; or phenol resins, urea resins, melamine resins, epoxy resins, and unsaturated polyester resins. These compounds may be used alone or in combination of two or more thereof. Among these, polyolef in-based

resins such as polyethylene, ethylene-vinyl acetate copolymers, ethylene-vinyl alcohol copolymers, and ethylene-acrylic acid ester copolymers may be used.

In addition, α-olefin polymers, blended products or copolymers of polyethylene and other α-olefin polymers, copolymers of α-olefin polymers such as polyethylene and ethylene-vinyl acetate, or blended products or copolymers with polyolefins such as ethylene-propylene copolymers may be used as the thermoplastic resin.

Above all, the thermoplastic resin may include at least one of linear low density polyethylene or low density polyethylene.

The lower limit of the content of the hindered amine light stabilizer and the benzoate compound in the weather resistant layer is, for example, equal to or more than 0.01 parts by mass, preferably equal to or more than 0.2 parts by mass, and more preferably equal to or more than 0.8 parts by mass with respect to 100 parts by mass of the thermoplastic resin. On the other hand, the upper limit thereof is, for example, equal to or less than 10 parts by mass, preferably equal to or less than 3 parts by mass, and more preferably equal to or less than 1 part by mass. Weather resistance can be improved by setting the total content of the hindered amine light stabilizer and the benzoate compound within such a range.

The content of the hindered amine light stabilizer in 100 parts by mass of the weather resistant layer is defined as X (parts by mass), and the content of the benzoate compound is defined as Y (parts by mass) .

At this time, the upper limit of X/Y in the weather resistant layer is equal to or less than 9.5/0.5, preferably equal to or less than 7.5/2.5, more preferably equal to or less than 7.3/2.7, and still more preferably equal to or less than 7.0/3.0. This can improve long-term weather resistance in a case of being used for sulfur fumigation or sulfur spraying. Although a detailed mechanism for such an effect is not clear, it is considered that long-term weather resistance can be obtained by increasing an ability to suppress sulfur absorption.

On the other hand, the lower limit of X/Y in the weather resistant layer is equal to or more than 1.5/8.5, preferably equal to or more than 2.0/8.0, more preferably equal to or more than 2.5/7.5, and still more preferably equal to or more than 3.0/7.0. This can improve transparency and long-term weather resistance.

The agricultural film includes an ultraviolet absorber.

Examples of the ultraviolet absorber include a benzophenone-based ultraviolet absorber, a benzotriazole-based ultraviolet absorber, and a triazine-based ultraviolet absorber.

Further, other examples of the ultraviolet absorber include a benzoate-based ultraviolet absorber other than Chemical Formulae B1 and B2, a salicylic acid ester-based ultraviolet absorber, and a cyanoacrylate-based ultraviolet absorber.

These compounds may be used alone or in combination of two or more thereof.

Known benzophenone-based ultraviolet absorbers are used as the benzophenone-based ultraviolet absorber, and examples thereof include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydriderate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone, 2-hydroxy-4-tert-butyl-4'-(2-methacryloyloxyethoxyethoxy)benzoph enone, 5,5'-methylenebis(2-hydroxy-4-methoxybenzophenone), and 2-hydroxy-4-methoxy-2'-carboxybenzophenone.

Known benzotriazole-based ultraviolet absorbers are used as the benzotriazole-based ultraviolet absorber, and examples thereof include 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3-dodecyl-5-methylphenyl)benzotriazole, 2-(2-hydroxy-3-tert-butyl-5-alkoxycarbonylethylphenyl)triazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-(2H-benzotriazol-2-yl)-4,6-bis(1-methyl-1-phenylethyl)phenol, and 2-(2H-benzotriazol-2-yl)-6-(dodecyl)-4-methylphenol.

Known triazine-based ultraviolet absorbers are used as the triazine-based ultraviolet absorber, and examples thereof include 2,4-bis(2,4-dimethylphenyl)-6-(2-hydroxy-4-octyloxyphenyl)-s-tri azine, 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5 -triazine, 2-[4,6-bis(2,4-dimethylphenyl)-1,3,5-triazin-2-yl]-5-(octyloxy)p henol, and 2-(4,6-diphenyl-1,3,5-triazin-2-yl)-5-(hexyloxy)phenol.

Known benzoate-based ultraviolet absorbers other than Chemical Formulae B1 and B2 are used as the benzoate-based ultraviolet absorber, and examples thereof include resorcinol monobenzoate and 2,4-di-t-amylphenyl-3',5'-di-t-butyl-4'-hydroxybenzoate.

Known salicylic acid ester-based ultraviolet absorbers are used as the salicylic acid ester-based ultraviolet absorber, and examples thereof include ethylene glycol salicylate, phenyl salicylate, octyl salicylate, benzyl salicylate, p-tert-butylphenyl salicylate, and homomenthyl salicylate.

Known cyanoacrylate-based ultraviolet absorbers are used as the cyanoacrylate-based ultraviolet absorber, and examples thereof include ethyl-A-cyano-B,B-diphenyl acrylate and methyl-2-cyano-3-methyl-3-(P-methoxyphenyl)acrylate.

The lower limit of the content of the ultraviolet absorber in the agricultural film is, for example, equal to or more than 0.01 parts by mass, preferably equal to or more than 0.05 parts by mass, and more preferably equal to or more than 0.07 parts by mass with respect to 100 parts by mass of the thermoplastic resin. On the other hand, the upper limit of the ultraviolet absorber is, for example, equal to or less than 1 part by mass, preferably equal to or less than 0.5 parts by mass, and more preferably equal to or less than 0.2 parts by mass. Weather resistance can be improved by setting the total content of the ultraviolet absorber within such a range.

Thickness of an agricultural film 100 is not particularly limited and is, for example, 10 μm to 1 mm, preferably 30 μm to 500 μm, and more preferably 50 μm to 300 μm.

Figs. 1(A) and 1(B) are cross-sectional diagrams showing an example of the configuration of the agricultural film of the present embodiment.

The agricultural film 100 of Fig. 1(A) includes at least one layer (weather resistant layer 10) containing the hindered amine light stabilizer and the benzoate compound described above. The agricultural film 100 may include a single or a plurality of the weather resistant layers 10 inside in a thickness direction.

In addition, the agricultural film 100 may be configured of a multilayer film having a multilayer structure including one or two or more other layers (base layer 20) in addition to the weather resistant layer 10, as shown in Fig. 1(B). The multilayer film may have two or more layers, for example, three layers, four layers, five or more layers, or seven or more layers. The upper limit of number of laminated layers in multilayer film is not particularly limited and may be, for example, equal to or less than 10 layers.

In the multilayer film, the ultraviolet absorber may be contained in any layer, may be contained in one or two or more layers, and may be contained in the outermost layer.

In addition, the base layer 20 may be provided on one surface of the weather resistant layer 10, and the base layer 20 and the surface layer may be provided as other layers on each of the one surface and the other surface of the weather resistant layer 10. Unlike the weather resistant layer 10, the other layer may have a configuration that does not contain both the hindered amine light stabilizer and the benzoate compound described above, and may include only either one of the hindered amine light stabilizer and the benzoate compound, and may contain only one of them or may not contain both of them.

The other layer may be configured of the above-mentioned thermoplastic resin, and may contain the following other additives as necessary. For example, linear low density polyethylene, low density polyethylene, or the like may be used as the thermoplastic resin for the other layer.

The agricultural film 100 of the present embodiment has a property of sulfur absorption suppressing ability.

The sulfur absorption suppressing ability can be evaluated using a degree of difficulty in absorbing sulfur in the agricultural film 100 (that is, a sulfur uptake amount) as an index.

As for the index of a sulfur uptake amount, in a case where the sulfur uptake amount measured according to following Procedure A is defined as AW, the thickness of the agricultural film 100 is defined as H1, and the thickness of the weather resistant layer 10 is defined as H2, the sulfur uptake amount can be calculated from $(\Delta W \times (H2/H1))/H2$, that is, $\Delta W/H1$. A small value of $\Delta W/H1$ is one index of the high sulfur absorption suppressing ability.

Hereinafter, the Procedure A for calculating ΔW (sulfur uptake amount) of the agricultural film 100 will be described.

<Procedure A>

Procedure A1: using the agricultural film 100, the content (ppm) of the elemental sulfur in the agricultural film 100 before the sulfur fumigation treatment is measured according to the following order of (1), (2), (4), and (5), and the measured value is defined as So.

Procedure A2: using the agricultural film 100 to be measured in the Procedure A1, the content (ppm) of the elemental sulfur in the agricultural film 100 after the sulfur fumigation treatment is measured according to the following order of (1), (2), (3), (4), and (5), and the measured value is defined as $S_1$. Note that $S_1$ is an average value of four measured values.

Procedure A3: using So obtained in the Procedure A1 and $S_1$ obtained in the Procedure A2, the sulfur uptake amount (ppm) of the agricultural film 100 is calculated based on Expression (I).

$$|S_1 - S_0| \cdots \text{Expression (I)}$$

(1): Preparation of test specimen

The agricultural film 100 is cut out to produce a strip-shaped film test specimen A having a length of 13 cm and a width of 2.5 cm.

(2): Washing treatment

The agricultural film 100A is immersed in distilled water having a liquid temperature of 25°C, taken out of the distilled water, and then dried.

(3): Sulfur fumigation treatment

A vinyl greenhouse having a closed space having a substantially rectangular parallelepiped shape with a length of 50 cm, a width of 56 cm, and a height of 60 cm is prepared. Then, a stirrer is installed on a top surface inside the vinyl greenhouse, a heating device is installed on a bottom surface inside the vinyl greenhouse, and an aluminum foil tray is placed on the heating device. Four of the test specimens A are installed in a suspended state inside the vinyl greenhouse.
Then, the following sulfur fumigation operation is repeated four times;

(Sulfur fumigation operation)

120 mg of powdery sulfur is put into the tray. Subsequently, a rotation speed of the stirrer is set to 180 rpm, and the tray is heated at 190°C for 4 hours.

(4): Surface treatment

Light irradiation is carried out on the test specimen A for 102 minutes under the following conditions and subsequently, water is sprayed on the test specimen A for 18 minutes together with light irradiation under the following conditions. This operation for a total of 120 minutes is carried out as one cycle for a total of 60 cycles, whereby a surface treatment for a total of 120 hours is carried out on the test specimen A.

(Conditions of light irradiation)

The test specimen A is irradiated by a xenon lamp having an irradiation intensity of 60 $W/m^2$ under the conditions of a temperature of 65°C and a relative humidity of 50%.
According to the knowledge of the present inventors, it was found that variations in measurement of the content of the elemental sulfur contained in the film can be reduced by carrying out an appropriate surface treatment after sulfur fumigation. Although the detailed mechanism for such an effect is not clear, it is considered that the sulfur adhering to the film surface can be appropriately removed by the surface treatment. In addition, it has been found that not only light irradiation but also water spraying is an important factor for this surface treatment.

(5): Measurement of elemental sulfur content

200 mg of a sample obtained by cutting the test specimen A in a plate thickness direction is added to 5 g of 70% nitric acid to obtain a nitric acid solution. The nitric acid solution is subjected to a pretreatment for liquefying the sample using a microwave wet decomposition method to obtain a measurement solution. The content of elemental sulfur in the obtained measurement solution is measured using an ICP emission spectrometer. The content of elemental sulfur in the measurement solution is defined as the content (ppm) of elemental sulfur in the agricultural film 100.
According to the knowledge of the present inventors, it has been found that variations in the measurement of the elemental sulfur content can be reduced by using a new vinyl greenhouse at an appropriate timing, in a case where the vinyl greenhouse has been used multiple times for a sulfur fumigation operation.
The sulfur uptake amount measured according to the Procedure A is defined as $\Delta W$, the thickness of the agricultural film 100 is defined as H1, and the thickness of the layer containing the hindered amine light stabilizer and the benzoate compound (the weather resistant layer 10) is defined as H2.
At this time, the agricultural film 100 may be configured so as to satisfy that the upper limit of $(\Delta W \times (H2/H1))/H2$, that is, $\Delta W/H1$ is, for example, equal to or less than 4.70 ppm/$\mu$m, preferably equal to or less than 4.60 ppm/$\mu$m, and more preferably equal to or less than 4.50 ppm/$\mu$m. The lower limit of $\Delta W/H1$ may be configured to be, for example, equal to or more than 2.80 ppm/$\mu$m.
Here, the film thickness ratio in the weather resistant layer 10 contained in the entire agricultural film 100 is calculated by H2/H1. The sulfur uptake amount per unit thickness in the weather resistant layer 10 is calculated by 1/H2.
The upper limit of a haze value of the agricultural film 100, which is measured in accordance with JIS K7136, is, for example, equal to or less than 50%, preferably equal to or less than 40%, and more preferably equal to or less than 30%. The lower limit of the haze value is not particularly limited, but may be equal to or more than 0% and may be equal to or more than 1%.

The agricultural film 100 can be used for various purposes such as a material for forming various agricultural or horticultural facilities such as a greenhouse, a material for protecting soil, or a storage material for storing soil or the like. Above all, the agricultural film 100 is preferably used for forming a greenhouse.

Next, a resin composition for forming an agricultural film according to the present embodiment, which is used to form the agricultural film 100, will be described.

The resin composition for forming an agricultural film (hereinafter, simply referred to as a "resin composition") includes one or two or more hindered amine light stabilizers selected from the group consisting of above-mentioned compound represented by General Formula (A1) and above-mentioned compound represented by General Formula (A2), one or two or more benzoate compounds selected from above-mentioned compounds represented by General Formula (B), an ultraviolet absorber including one or two or more selected from the group consisting of the above-mentioned benzophenone-based ultraviolet absorber, benzotriazole-based ultraviolet absorber, and triazine-based ultraviolet absorber, and the above-mentioned thermoplastic resin.

This resin composition is configured such that X and Y satisfy the above-mentioned range in a case where the content of the hindered amine light stabilizer in terms of mass is defined as X and the content of the benzoate compound in terms of mass is defined as Y.

This resin composition can be used for forming an agricultural film, and more specifically for forming a weather resistant layer of an agricultural film.

As the formulation ratio of the above-mentioned components in the resin composition, for example, the formulation ratio in the weather resistant layer described in the agricultural film may be adopted.

The resin composition may include other additives commonly used for agricultural films within a range that does not impair the effects of the present invention, in addition to the above-mentioned components.

Examples of other additives include a phenolic antioxidant, a phosphorus-based antioxidant, a sulfur-based antioxidant, other hindered amine compounds, a nucleating agent, a processability improver, a filler, a plasticizer, a metal soap, an infrared absorber, an antistatic agent, an anti-fogging agent, an anti-misting agent, and a mildew-proofing agent. These compounds may be used alone or in combination of two or more thereof.

Examples of the phenolic antioxidant include 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzylthioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazin e, 2,2'-methylenebis(4-methyl-6-tert-butylphenol), bis[3,3-bis(4-hydroxy-3-tert-butylphenyl)butyric acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenz yl)phenyl]terephthalate, 1,3,5-tris(2,6-dimethyl-3-hydroxy-4-tert-butylbenzyl)isocyanurat e, 1,3,5-tris(3,5-di-tert-butyl-4-hydroxybenzyl)isocyanurate, 1,3,5-tris(3,5-di-tert-butyl-4-hydroxybenzyl)-2,4,6-trimethylben zene, 1,3,5-tris[(3,5-di-tert-butyl-4-hydroxyphenyl)propionyloxyethyl] isocyanurate, tetrakis[methylene-3-(3',5'-di-tert-butyl-4'-hydroxyphenyl)propi onate]methane, 2-tert-butyl-4-methyl-6-(2-acryloyloxy-3-tert-butyl-5-methylbenz yl)phenol, 3,9-bis[2-(3-tert-butyl-4-hydroxy-5-methylhydrocinnamoyloxy)-1,1 -dimethylethyl]-2,4,8,10-tetraoxaspiro[5.5]undecane, triethylene glycolbis[β-(3-tert-butyl-4-hydroxy-5-methylphenyl)propionate], and tocophenol.

Examples of the phosphorus-based antioxidant include triphenyl phosphite, tris(2,4-di-tert-butylphenyl)phosphite, tris(2,5-di-tert-butylphenyl)phosphite, tris(nonylphenyl)phosphite, tris(dinonylphenyl)phosphite, tris(mono-di mixed nonylphenyl) phosphite, diphenyl acid phosphite, 2,2'-methylenebis(4,6-di-tert-butylphenyl)octylphosphite, diphenyldecylphosphite, diphenyloctylphosphite, di(nonylphenyl)pentaerythritol diphosphite, phenyldiisodecylphosphite, tributylphosphite, tris(2-ethylhexyl)phosphite, tridecylphosphite, trilaurylphosphite, dibutyl acid phosphite, dilauryl acid phosphite, trilauryl trithiophosphite, bis(neopentyl glycol)-1,4-cyclohexanedimethyldiphosphite, bis(2,4-di-tert-butylphenyl)pentaerythritol diphosphite, bis(2,5-di-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, distearyl pentaerythritol diphosphite, tetra(C12-15 mixed alkyl)-4,4'-isopropylidene diphenylphosphite, bis[2,2'-methylenebis(4,6-diamylphenyl)]-isopropylidene diphenyl phosphite, tetratridecyl-4,4'-butylidenebis(2-tert-butyl-5-methylphenol) dip hosphite, hexa(tridecyl)-1,1,3-tris(2-methyl-5-tert-butyl-4-hydroxyphenyl) butane triphosphite, tetrakis(2,4-di-tert-butylphenyl)biphenylene diphosphonite, tris(2-[(2,4,7,9-tetrakis-tert-butyldibenzo[d,f] [1,3,2]dioxaphos phepin-6-yl)oxy]ethyl)amine, 2-(1,1-dimethylethyl)-6-methyl-4-[3-[[2,4,8,10-tetrakis(1,1-dime thylethyl)dibenzo[d,f] [1,3,2]dioxaphosphepin-6-yl]oxy]propyl]phe nol, 9,10-dihydro-9-oxa-10-phosphaphenanthrene-10-oxide, and 2-butyl-2-ethylpropanediol-2,4,6-tri-tert-butylphenol monophosphite.

Examples of the sulfur-based antioxidant include dialkylthiodipropionates such as dilauryl, dimyristyl, myristyl stearyl, and distearyl esters of thiodipropionic acid, and β-alkyl mercaptopropionic acid esters of polyols such as pentaerythritol tetra(β-dodecylmercaptopropionate) .

Examples of other hindered amine compounds include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidylbutane tetracarboxylate, tetrakis(1,2,2,6,6-pentamethyl-4-piperidylbutane tetracarboxylate, bis(2,2,6,6-tetramethyl-4-piperidyl)-di(tridecyl)-1,2,3,4-butane tetracarboxylate, bis (1,2,2,6,6-pentamethyl-4-piperidyl)-di (tridecyl)-1, 2,3,4-buta ne tetracarboxylate, bis(1,2,2,6,6-pentamethyl-4-piperidyl)-2-butyl-2-(3,5-di-tert-bu tyl-4-hydroxybenzyl) malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethan e polycondensate, 1,6-bis(2,2,6,6-tetramethyl-4-piperidylamino)hexane/2,4-dichloro -6-morpholino-s-triazine polycondensate, 1,6-bis(2,2,6,6-tetramethyl-4-piperidylamino)hexane/2,4-dichloro -6-tert-octylamino-s-triazine polycondensate, 1,5,8,12-tetrakis[2,4-bis(N-butyl-N-(2,2,6,6-tetramethyl-4-piper idyl)amino)-s-triazine-6-yl]-1,5,8,12-tetraazadodecane, 1,5,8,12-tetrakis[2,4-bis(N-butyl-N-(1,2,2,6,6-pentamethyl-4-pip eridyl)amino)-s-triazin-6-yl]-1,5,8,12-tetraazadodecane, 1,6,11-tris[2,4-bis(N-butyl-N-(2,2,6,6-tetramethyl-4-piperidyl)a mino)-s-triazin-6-ylaminoundecane, and 1,6(1,2,2,6,6-pentamethyl-4-piperidyl)amino) -s-triazin-6-ylaminoundecane.

Examples of the nucleating agent include aromatic carboxylic acid metal salts such as p-t-butyl aluminum benzoate and sodium benzoate; acidic phosphoric acid ester metal salts such as sodium bis(2,4-di-tert-butylphenyl)phosphate, lithium bis(2,4-di-tert-butylphenyl)phosphate, and sodium-2,2'-methylenebis(4,6-di-tert-butylphenyl)phosphate; and polyhydric alcohol derivatives such as dibenzylidene sorbitol and bis(methylbenzylidene) sorbitol.

The processability improver can be appropriately selected from known processability improvers and, for example, ethylenebisstearic acid amide or erucic acid amide may be used.

Examples of the filler include calcium carbonate, calcium oxide, calcium hydroxide, zinc hydroxide, zinc carbonate, zinc sulfide, magnesium oxide, magnesium hydroxide, magnesium carbonate, aluminum oxide, aluminum hydroxide, mineral silicates such as sodium alumina silicate, hydrocalumite, aluminum silicate, magnesium silicate, calcium silicate, and zeolite, activated clay, talc, clay, red iron oxide, asbestos, antimony trioxide, silica, glass beads, mica, sericite, glass flakes, asbestos, wollastonite, potassium titanate, PMF (mineral fiber), gypsum fiber, zonolite, MOS (Magnesium Hydroxide Sulfate Hydrate, fibrous magnesium compound), phosphate fiber, glass fiber, carbon fiber, aramid fiber, and cellulose nanofiber. Among these, an inorganic filler may be used. The filler is preferably surface-treated with a titanium-based surface treatment agent, a silane-based surface treatment agent, or the like in order to improve an affinity with a resin.

Examples of the plasticizer include phthalic acid ester, dibasic acid ester, chlorinated paraffin, polyester, epoxidized ester, phosphoric acid ester, and trimellitic acid ester.

As the metal soap, for example, a salt of a metal such as magnesium, calcium, aluminum, or zinc with a saturated or unsaturated fatty acid such as lauric acid, myristic acid, palmitic acid, stearic acid, behenic acid, or oleic acid is used. The metal soap is used regardless of moisture content, melting point, particle size, composition of fatty acid, whether the production method is a double decomposition method by the reaction of a fatty acid salt of an alkali metal and a metal (hydr)oxide or a direct method in which a neutralization reaction of a fatty acid and a metal (hydr)oxide are carried out in the presence or absence of a solvent, or even in a case where there is an excess of either fatty acid or metal.

Examples of the infrared absorber include hydrotalcite compounds and lithium aluminum composite hydroxides. These compounds may be used alone or in combination of two or more thereof.

The hydrotalcite compound may be a natural product or a synthetic product, or may be a compound modified with an alkali metal such as lithium. Preferred is a compound having a composition represented by General Formula: $Zn_xMg_yAl_2 (OH)_2 (x+y+2)CO_3 \cdot nH_2O$ (where x is 0 to 3, y is 1 to 6, x+y is 4 to 6, and n is 0 to 10), which can be used regardless of the presence or absence of water of crystallization or the presence or absence of a surface treatment.

The hydrotalcite compound may be one obtained by dehydrating water of crystallization, which may be coated with a higher fatty acid such as stearic acid, a higher fatty acid metal salt such as an alkali metal salt of oleic acid, an organic sulfonic acid metal salt such as an alkali metal salt of dodecylbenzene sulfonic acid, higher fatty acid amide, higher fatty acid ester, wax, or the like.

Examples of the hydrotalcite compound include natural hydrotalcite and commercially available products under the trade names of DHT-4A (manufactured by Kyowa Chemical Industry Co., Ltd.), MAGCLEAR (manufactured by Toda Kogyo Corp.), MAGCELLER (manufactured by Kyowa Chemical Industry Co., Ltd.), and STABIACE HT-P (manufactured by Sakai Chemical Industry Co., Ltd.).

Examples of the lithium aluminum composite hydroxide include OPTIMA-SS (manufactured by Toda Kogyo Corp.) and MIZUKALAK (manufactured by Mizusawa Industrial Chemicals, Ltd.).

Examples of the antistatic agent include cationic antistatic agents such as fatty acid quaternary ammonium ion salts and polyamine quaternary salts; anionic antistatic agents such as higher alcohol phosphate ester salts, higher alcohol EO adducts, polyethylene glycol fatty acid esters, anionic type alkyl sulfonic acid salts, higher alcohol sulfuric acid ester salts, higher alcohol ethylene oxide adduct sulfuric acid ester salts, and higher alcohol ethylene oxide adduct phosphoric acid ester salts; nonionic antistatic agents such as polyhydric alcohol fatty acid esters, polyglycol phosphoric acid esters, and polyoxyethylene alkyl allyl ethers; amphoteric alkyl betaines such as alkyldimethylaminoacetic acid betaines; and amphoteric antistatic agents such as imidazoline type amphoteric activators.

Examples of the anti-fogging agent include sorbitan-based surfactants such as sorbitan fatty acid esters, for

example, sorbitan monopalmitate, sorbitan monostearate, sorbitan monopalmitate, sorbitan monomontanate, sorbitan monooleate, and sorbitan dioleate, and alkylene oxide adducts thereof; glycerin-based surfactants such as glycerin fatty acid esters, for example, glycerin monopalmitate, glycerin monostearate, diglycerin distearate, triglycerin monostearate, tetraglycerin dimontanate, glycerin monooleate, diglycerin monooleate, diglycerin sesquioleate, tetraglycerin monooleate, hexaglycerin monooleate, hexaglycerin trioleate, tetraglycerin trioleate, tetraglycerin monolaurate, and hexaglycerin monolaurate, and alkylene oxide adducts thereof; polyethylene glycol-based surfactants such as polyethylene glycol monopalmitate and polyethylene glycol monostearate; alkylene oxide adducts of alkylphenols; esters of sorbitan/glycerin condensates with organic acids; and nonionic surfactants such as polyoxyethylene alkylamines, for example, polyoxyethylene (2 mol) stearylamine, polyoxyethylene (4 mol) stearylamine, polyoxyethylene (2 mol) stearylamine monostearate, and polyoxyethylene (4 mol) laurylamine monostearate, and fatty acid esters thereof.

Examples of the anti-misting agent include fluorine compounds having a perfluoroalkyl group, $\omega$-hydrofluoroalkyl group, or the like (especially fluorine-based surfactants), and silicone compounds having an alkylsiloxane group (especially silicone-based surfactants).

Examples of the mildew-proofing agent include organic mildew-proofing agents such as nitrogen-containing sulfur-containing mildew-proofing agents, organic bromine-based mildew-proofing agents, nitrogen-containing mildew-proofing agents, and arsenic-based mildew-proofing agents, and inorganic mildew-proofing agents such as silver compounds.

The method for producing an agricultural film according to the present embodiment includes a molding step of molding a resin composition into a film.

A known method is used in the molding step, and a melt extrusion molding method such as an inflation method or a die method, a solution casting method, a calender method, a coextrusion method by an inflation method, a die method or the like, a multilayer processing method, a laminating method, an internal or external heating method, or the like may be used. This gives a single or multiple layer agricultural film.

In addition, the method for producing an agricultural film may further include a mixing step of mixing the above-mentioned components to obtain a resin composition.

For the mixing step, for example, there is a method of premixing the components using various mixers such as a tumbler and a Henschel mixer, and then melt-kneading the components with a Banbury mixer, a roll, a Brabender, a single-screw kneading extruder, a twin-screw kneading extruder, a kneader, or the like.

Alternatively, the resin composition may be produced without premixing the respective components, or by premixing only a part of the components, supplying the mixture to an extruder using a feeder and then melt-kneading the mixture. Alternatively, the resin composition may also be produced by using a resin composition which is obtained by premixing a part of the components, supplying the mixture to an extruder and then melt-kneading the mixture, as a masterbatch, mixing again with other components, and then melt-kneading the mixture.

In addition, the synthetic resin used in the mixing/kneading step may have a predetermined shape such as a powder shape or a pellet shape, or a fibrous shape.

According to the present embodiment, it is possible to provide a method of improving an ability of an agricultural film to suppress sulfur absorption. The method of improving an ability of an agricultural film to suppress sulfur absorption can improve the ability of the agricultural film 100 to suppress sulfur absorption by adding a benzoate compound as a synergist to a hindered amine light stabilizer.

As the predetermined hindered amine light stabilizer and the predetermined benzoate compound, those described in the agricultural film are used.

According to the present embodiment, a method for growing a plant using the agricultural film 100 can be provided. The method for growing a plant may include a step of disposing the agricultural film 100 in an agricultural or horticultural facility, a step of disposing a plant in the agricultural or horticultural facility, and a step of carrying out sulfur fumigation in the agricultural or horticultural facility. This makes it possible to realize an agricultural or horticultural facility with excellent long-term weather resistance. For example, a greenhouse is used as the agricultural or horticultural facility.

Although the embodiments of the present invention have been described above, these embodiments are only examples of the present invention, and various configurations other than the above-mentioned configurations can be adopted. In addition, the present invention is not limited to the above-mentioned embodiments, and includes modifications and improvements as long as the object of the present invention can be achieved.

Hereinafter, examples of a reference mode will be additionally described.

1. An agricultural film for use in sulfur fumigation or sulfur spraying, the agricultural film including a weather resistant layer containing:

    one or two or more hindered amine light stabilizers selected from the group consisting of compounds represented by Chemical Formula A1 to Chemical Formula A3,
    at least one benzoate compound of a compound represented by Chemical Formula B1 and a compound represented by Chemical Formula B2,

an ultraviolet absorber including one or two or more selected from the group consisting of a benzophenone-based ultraviolet absorber, a benzotriazole-based ultraviolet absorber, and a triazine-based ultraviolet absorber, and

a thermoplastic resin,

in which X and Y satisfy 1.5/8.5 ≤ X/Y ≤ 7.5/2.5 in a case where the content of the hindered amine light stabilizer is defined as X and the content of the benzoate compound is defined as Y.

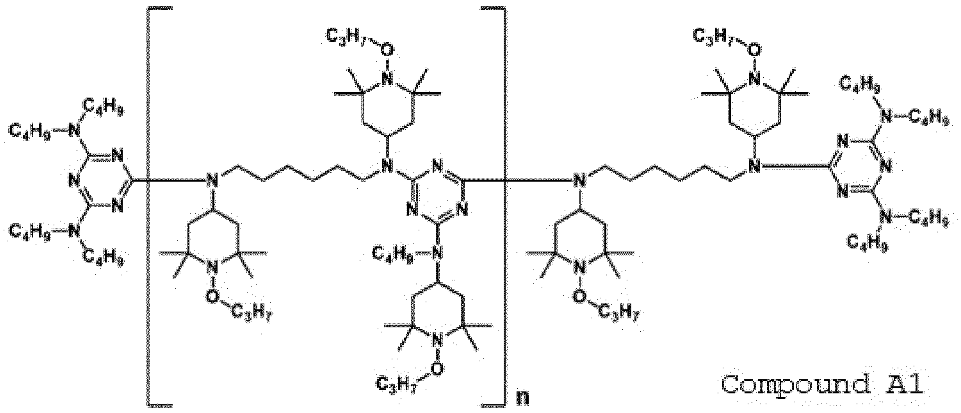

Compound A1

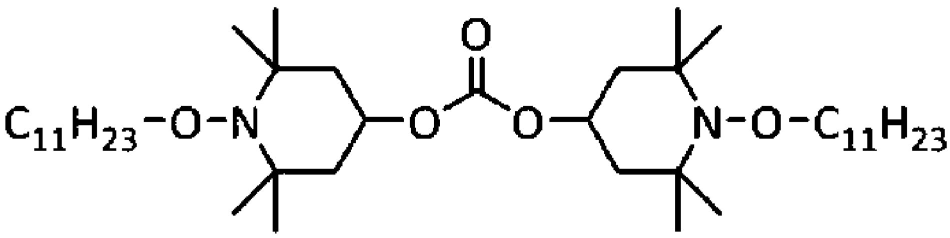

Compound A2

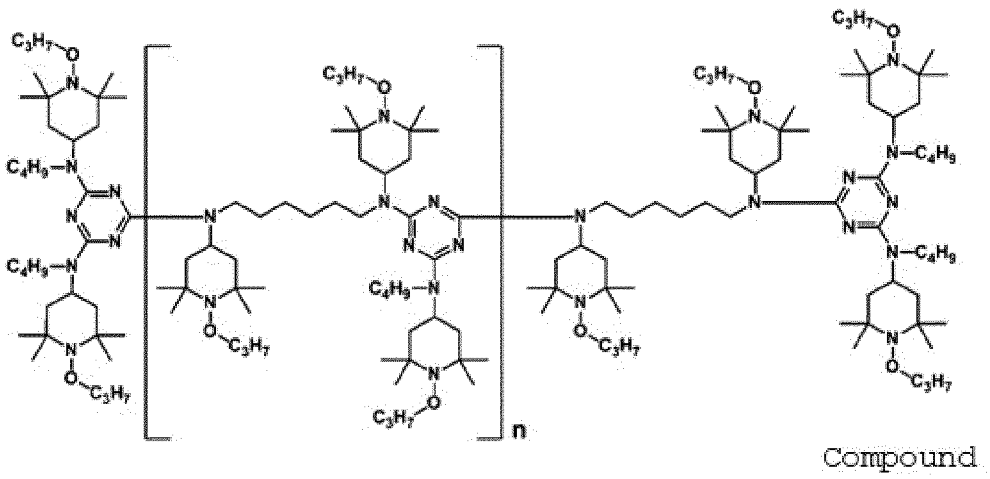

Compound A3

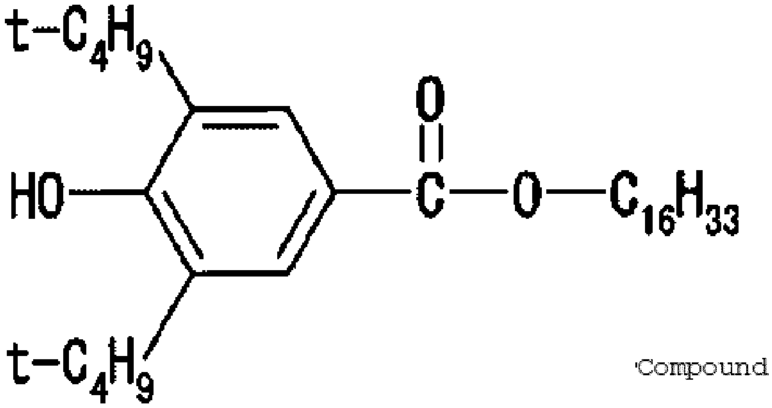

Compound B1

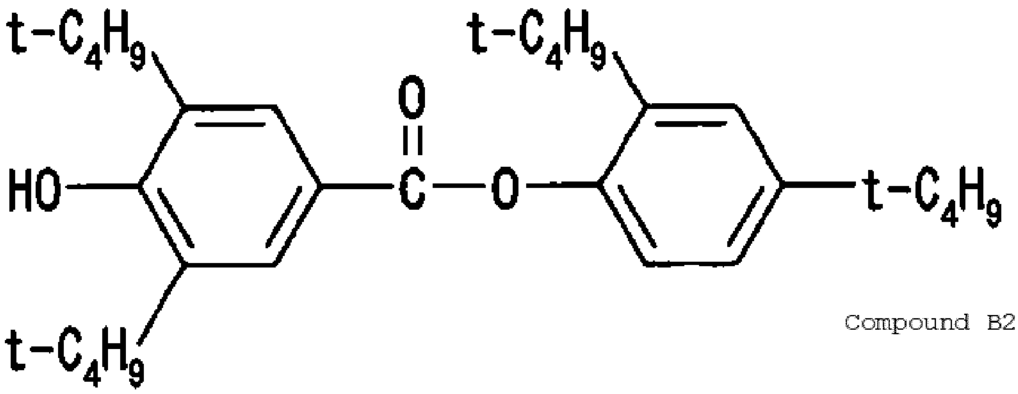

Compound B2

2. The agricultural film according to 1,
in which the content of the ultraviolet absorber is equal to or more than 0.01% by mass and equal to or less than 1% by mass with respect to 100% by mass of the thermoplastic resin.
3. The agricultural film according to 1 or 2,
in which a total content of the hindered amine light stabilizer and the benzoate compound is equal to or more than 0.01% by mass and equal to or less than 10% by mass with respect to 100% by mass of the thermoplastic resin.
4. The agricultural film according to any one of 1 to 3, including:
a multilayer structure including the weather resistant layer and another layer containing a thermoplastic resin.
5. The agricultural film according to any one of 1 to 4,
in which the thermoplastic resin includes linear low density polyethylene or low density polyethylene.
6. The agricultural film according to any one of 1 to 5,
in which the agricultural film is used for forming a greenhouse.
7. A resin composition for forming an agricultural film, which is used for forming the agricultural film according to any one of 1 to 6.
8. A method for growing a plant, including:

a step of disposing the agricultural film according to any one of 1 to 6 in a greenhouse,
a step of disposing a plant in the greenhouse; and
a step of carrying out sulfur fumigation in the greenhouse. Examples

Hereinafter, the present invention will be described in detail with reference to examples, but the present invention is not limited to the description of these examples.

<Preparation of resin composition>

(Example 1)

100 parts by mass of a thermoplastic resin (linear low density polyethylene), 0.3 parts by mass of a hindered amine light stabilizer of the following compound A1, 0.7 parts by mass of a benzoate compound of the following compound

B1, 0.1 parts by mass of an ultraviolet absorber (benzophenone-based UV absorber, product name: ADEKA STAB 1413, manufactured by ADEKA Corporation), 0.05 parts by mass of a phenolic antioxidant (stearyl(3,5-di-tert-butyl-4-hydroxyphenyl)propionate), 0.05 parts by mass of a phosphorus-based antioxidant (tris(2,4-di-tert-butylphenyl)phosphite), and 0.05 parts by mass of a metal soap (calcium stearate) were mixed for 30 minutes using a rocking mixer (manufactured by Aichi Electric Co., Ltd.), and then the mixture was granulated using a twin-screw extruder (TEX-28V, manufactured by Nikko TPK Shoji Co., Ltd.) under the conditions of an extrusion temperature of 190°C and a screw rotation speed of 150 rpm. The granulated pellets were dried at 60°C for 8 hours using a hot air dryer (WINDY OVEN WFO-1001SD, manufactured by EYELA). In this way, a pelletized resin composition was obtained.

(Examples 2 to 14, and Comparative Examples 1 to 3)

Pelletized resin compositions were obtained by mixing and extrusion of resin composition components in the same manner as in Example 1, except that the thermoplastic resin, the hindered amine light stabilizer, the benzoate compound, and the ultraviolet absorber were used in accordance with the formulation ratios shown in Table 1.
The compound A1 used was crushed in a mortar and allowed to stand overnight in a desiccator. The compound A2 was added using a liquid addition device.
In Table 1, X/Y represents the content ratio of the hindered amine light stabilizer and the benzoate compound in a case where the content of the hindered amine light stabilizer is defined as X (parts by mass) and the content of the benzoate compound is defined as Y (parts by mass) in 100 parts by mass of the resin composition used for forming the weather resistant layer.
Information on raw materials in Table 1 is shown below.

(Thermoplastic resin)

- Linear low density polyethylene: NF464N, density: 0.918 kg/$m^3$, manufactured by Japan Polyethylene Corporation
- Low density polyethylene: NUC-8230, density: 0.928 kg/$m^3$, manufactured by NUC Corporation
- Ethylene-vinyl acetate copolymer resin: ULTRASEN 630, density: 0.936 kg/$m^3$, manufactured by Tosoh Corporation

(Hindered amine light stabilizer)

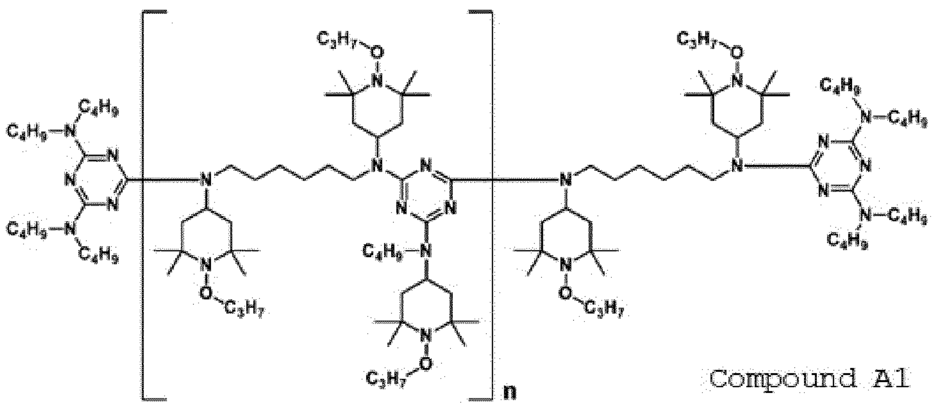

Compound A1

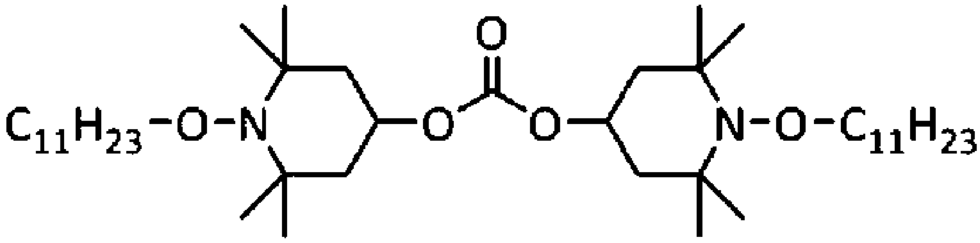

Compound A2

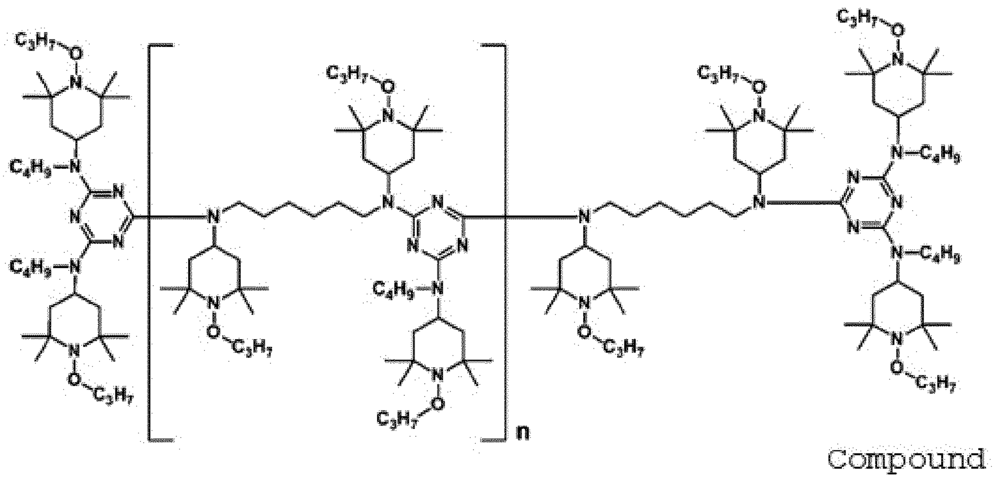

Compound A3

(Benzoate compound)

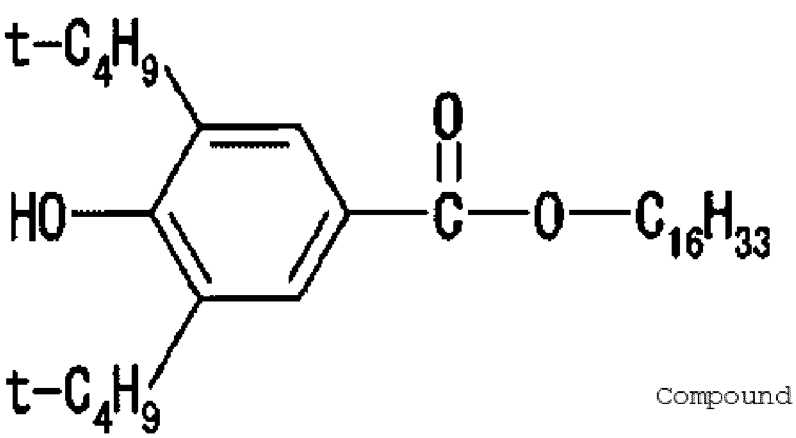

Compound B1

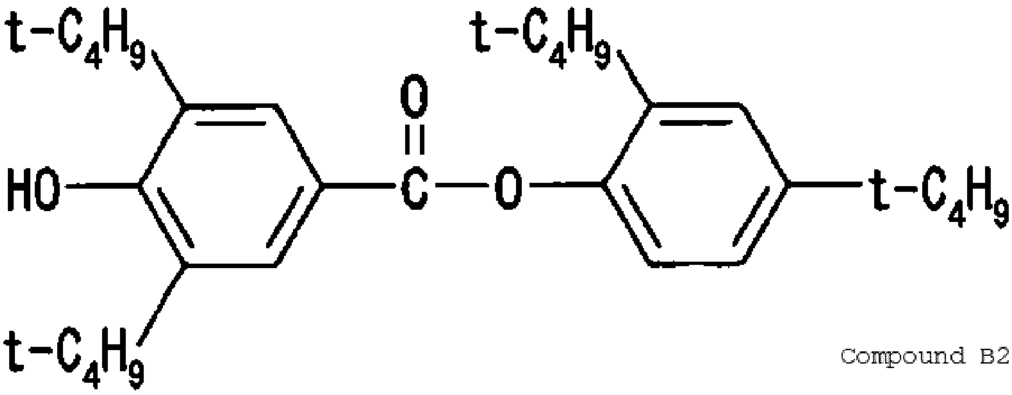

Compound B2

(Ultraviolet absorber)

- Ultraviolet absorber C1: benzophenone-based UV absorber (ADEKA STAB 1413, manufactured by ADEKA Corporation)
- Ultraviolet absorber C2: benzotriazole-based UV absorber (ADEKA STAB LA-36, manufactured by ADEKA Corporation)

- Ultraviolet absorber C3: triazine-based UV absorber (Cyasorb UV-1164, manufactured by Cytec Industries Inc.)

[Table 1]

| | | Unit | Comparative Example 1 | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 2 | Comparative Example 3 |
|---|---|---|---|---|---|---|---|---|---|---|---|---|---|---|---|---|---|---|---|
| Thermosetting resin | Linear low density polyethylene | Parts by mass | 100 | 100 | 100 | 100 | 100 | 100 | 100 | | 90 | 70 | 100 | 100 | 100 | 100 | 100 | 100 | 100 |
| | Low density polyethylene | | | | | | | | | 100 | | | | | | | | | |
| | Ethylene-vinyl acetate copolymer resin | | | | | | | | | | 10 | 30 | | | | | | | |
| Hindered amine light stabilizer | Compound A1 | | 0.1 | 0.3 | 0.5 | | | | 0.5 | 0.5 | 0.5 | 0.5 | 0.6 | 0.7 | 0.25 | 0.95 | 0.75 | 0.99 | 1.0 |
| | Compound A2 | | | | | | 0.5 | 1.0 | | | | | | | | | | | |
| | Compound A3 | | | | | 0.5 | | | | | | | | | | | | | |
| Benzoate compound | Compound B1 | | 0.9 | 0.7 | 0.5 | 0.5 | 0.5 | 1.0 | | 0.5 | 0.5 | 0.5 | 0.4 | 0.3 | 0.75 | 0.05 | 0.25 | 0.01 | - |
| | Compound B2 | | | | | | | | 0.5 | | | | | | | | | | - |
| Ultraviolet absorber | Ultraviolet absorber C1 | | 0.1 | 0.1 | 0.1 | 0.1 | 0.1 | 0.1 | 0.1 | 0.1 | | | 0.05 | 0.2 | 0.1 | 0.1 | 0.1 | 0.1 | 0.1 |
| | Ultraviolet absorber C2 | | | | | | | | | | 0.1 | | | | | | | | |
| | Ultraviolet absorber C3 | | | | | | | | | | | 0.1 | | | | | | | |
| X/Y | | | 1.0/9.0 | 3.0/7.0 | 5.0/5.0 | 0.5/0.5 | 5.0/5.0 | 5.0/5.0 | 5.0/5.0 | 5.0/5.0 | 5.0/5.0 | 5.0/5.0 | 6.0/4.0 | 7.0/3.0 | 2.5/7.5 | 9.5/0.5 | 7.5/2.5 | 9.9/0.1 | - |
| Sulfur uptake amount | | | B | B | B | B | B | B | B | B | B | B | B | B | B | B | B | D | D |
| Long-term weather resistance | | | D | B | B | B | B | B | B | B | B | B | B | B | B | B | B | D | D |
| Haze | | | D | B | B | B | B | B | B | A | B | A | B | B | B | B | B | B | B |
| Transparency | | | D | B | B | B | B | B | B | B | B | B | B | B | B | B | B | B | B |

<Production of agricultural film>

Using the pelletized resin compositions obtained in each of Examples and Comparative examples and using an inflation molding machine, extrusion was carried out under the conditions of a resin temperature: 190°C, a torque: 50 to 70 N·m, and an extrusion rate: 1.5 kg/h to produce single-layer agricultural films having a thickness of 50 μm. At this time, the thickness H1 of the agricultural film was 50 μm, and the thickness H2 of the weather resistant layer containing the hindered amine light stabilizer and the benzoate compound (synergist) was 50 μm. The thickness was measured using a digital microscope on a cut surface obtained by cutting the agricultural film in a plate thickness direction.
Here, detailed production conditions of the agricultural film are as follows.
In a LABO PLASTOMILL 4C150-01 (manufactured by Toyo Seiki Co., Ltd.) which has an extrusion section of φ20 mm and L/D = 25 (full flight screw CR = 2.0), the obtained pellet was formed into a film by inflation molding using a ring die having a diameter of 25 mm and a slit width of 0.8 mm, and then the obtained film was wound up by a film take-up device manufactured by SUMTAK Corporation. The conditions of the extrusion section were a processing temperature of 190°C and a screw rotation speed of 60 rpm, and the winding speed was adjusted so as to obtain an agricultural film having a film thickness of 50 μm.
For the obtained agricultural film, the sulfur uptake amount and the haze value were measured to evaluate long-term weather resistance and transparency.

<Measurement of sulfur uptake amount>

(Procedure A1)

Using the obtained agricultural film,

the content (ppm) of the elemental sulfur in the agricultural film before the sulfur fumigation treatment was measured according to the following order of (1), (2), (4), and (5). The measured value is defined as So.

(Procedure A2)

Using the agricultural film for which the content of elemental sulfur before the sulfur fumigation treatment is measured in the Procedure A1, the content (ppm) of the elemental sulfur in the agricultural film after the sulfur fumigation treatment was measured according to the following order of (1), (2), (3), (4), and (5) . The measured value is defined as $S_1$. Note that $S_1$ was an average value of four measured values.

(Procedure A3)

Then, using So obtained in the Procedure A1 and $S_1$ obtained in the Procedure A2, the sulfur uptake amount ΔW (ppm) of the agricultural film was calculated based on Expression (I).

$$\Delta W\ (ppm) = |S_1 - S_0| \cdots \text{Expression (I)}$$

(1): Preparation of test specimen

The agricultural film was cut out to produce a strip-shaped film test specimen A having a length of 13 cm and a width of 2.5 cm.

(2): Washing treatment

The test specimen A, 3 L of distilled water having a liquid temperature of 25°C, and a stirrer chip were put in a beaker having a diameter of 18 cm and stirred with a stirrer for 5 minutes. The test specimen A immersed in distilled water was taken out, and the moisture on the surface thereof was wiped off with KIMWIPE. After that, the test specimen A was dried by holding it in a suspended state for 30 minutes.

(3): Sulfur fumigation treatment

Fig. 2 shows an outline of fumigation equipment 200 used for the sulfur fumigation treatment.
First, a vinyl greenhouse 210 (Portable Fume Hood ECONO HOOD, manufactured by AS ONE Corporation)

having a closed space having a substantially rectangular parallelepiped shape with a length of 50 cm, a width of 56 cm, and a height of 60 cm was prepared.

Then, a stirrer 220 (Three-One Motor BL1200, manufactured by Shinto Scientific Co., Ltd.) was installed on a top surface 212 inside the vinyl greenhouse 210, and a heating device (hot plate 230) was installed on a bottom surface 214 inside the vinyl greenhouse 210. Then, an aluminum foil tray 240 (bottom area: 16 $cm^2$, width: 4 cm, depth: 4 cm, height: 2 cm) was placed in the center of the hot plate 230 (C-MAG hot plate HP4, manufactured by IKA Company) . On the other hand, four of the test specimens A (test specimen 250) were installed in a suspended state inside the vinyl greenhouse 210. Four of the test specimens 250 were arranged so as to be appropriately separated from each other and to be located at approximately half the height of the vinyl greenhouse 210.

Then, the following sulfur fumigation operation was repeated four times.

(Sulfur fumigation operation)

First, 120 mg of powdery sulfur 260 was put into the tray 250. Subsequently, the stirrer 220 was rotated at a rotation speed of 180 rpm, and in that state, the tray 240 was heated at 190°C for 4 hours using the hot plate 230. At this time, the temperature of the hot plate 230 was elevated from 20°C to 190°C in about 4 minutes. Then, the hot plate 230 was stopped to complete the heating, and naturally cooled to room temperature over about 30 minutes.

(4): Surface treatment

Light irradiation was carried out on the test specimen A for 102 minutes under the following conditions and subsequently, water was sprayed on the test specimen A for 18 minutes together with light irradiation under the following conditions. This operation for a total of 120 minutes was carried out as one cycle for a total of 60 cycles, whereby a surface treatment for a total of 120 hours was carried out on the test specimen A.

(Conditions of light irradiation)

The test specimen A was irradiated by a xenon lamp having a UV irradiation intensity of 60 $W/m^2$ and a wavelength of 300 to 400 nm for 120 hours using a xenon weather resistance tester under the conditions of a black panel temperature of 65°C and a relative humidity of 50%, and using a borosilicate filter.

(5): Measurement of elemental sulfur content

200 mg of a sample obtained by cutting the test specimen A in a plate thickness direction was added to 5 g of 70% nitric acid to obtain a nitric acid solution. The nitric acid solution was subjected to a pretreatment for liquefying the sample using a microwave wet decomposition apparatus (TOPwave, manufactured by Analytik Jena AG) under the conditions of a temperature of 230°C and a pressure of 40 bar for 1 hour to obtain a measurement solution.

The content of elemental sulfur in the obtained measurement solution was measured using an ICP emission spectrometer (SPS 3500, manufactured by SII Nano Technology Inc.).

In Table 1, with regard to the sulfur uptake amount (value of $\Delta W \times (H2/H1))/H2$), that is, $\Delta W/H1$), the sulfur uptake amount was evaluated as B in a case where it was less than -5% of the value of Comparative Example 3, and was evaluated as D in a case where it was about the same as the value of Comparative Example 3 (within ±5%) or in a case where it was more than +5% of the value of Comparative Example 3.

<Long-term weather resistance>

An accelerated weathering test was carried out in accordance with ISO4892-2, by irradiating the agricultural films of Examples and Comparative Examples with a xenon lamp having a UV irradiation intensity of 60 $W/m^2$ and a wavelength of 300 to 400 nm for 120 hours under the conditions of a black panel temperature of 65°C and a relative humidity of 50%, and using a borosilicate filter. At this time, 120 minutes was set as one cycle, and a light irradiation cycle of irradiation with light for 102 minutes and then irradiation with light for 18 minutes together with water spraying was carried out for 60 cycles in total for 120 hours.

During the accelerated weathering test, (sulfur fumigation operation) was carried out once every 120 hours in the same manner as in the section of (3): Sulfur fumigation treatment.

Then, at 0 h, 840 h, 1200 h, and 2040 h of the accelerated weathering test, a residual tensile strength ratio (%) of each film at a test speed of 500 mm/min was measured in accordance with JIS K7161-1 using AG-Xplus (manufactured by Shimadzu Corporation) . The residual tensile strength ratio (%) was defined as a rate of decrease in tensile strength in a case where the tensile strength of the film before the accelerated weathering test was taken as 100%.

As a result, at 1200 h of the accelerated weathering test, the residual tensile strength ratio of Comparative Examples 2 and 3 was lower than those of Examples 1 to 14 and Comparative Example 1, and at 2040 h of the accelerated weathering test, the residual tensile strength ratios of Comparative Examples 1 to 3 were lower than those of Examples 1 to 14. Therefore, it was shown that the agricultural films of Examples 1 to 14 had excellent long-term weather resistance as compared with Comparative Examples 1 to 3.
In Table 1, it was evaluated as B in a case where the residual tensile strength ratio at 2040 h was in a range where there was no problem in practical use, and it was evaluated as D in a case where the residual tensile strength ratio at 2040 h was in a range of not being practically usable.

<Transparency>

Haze (haze value: %) was measured in accordance with JIS K7136 for the agricultural films of Examples and Comparative Examples.
In Table 1, the grade was assigned as follows: A in a case where the haze value was equal to or less than 20%, B in a case where the haze value was more than 20% and equal to or less than 30%, C in a case where the haze value was more than 30% and equal to or less than 50%, and D in a case where the haze value was more than 50%.
In Table 1, it was evaluated as B in a case where the haze value was in a range where there was no problem in practical use, and it was evaluated as D in a case where the haze value was in a range of not being practically usable.
The haze values of the agricultural films of Examples 1 to 14 were low enough to be used without any practical problems. On the other hand, the haze value of the agricultural film of Comparative Example 1 was significantly higher than that of each Example.
In addition, the surfaces of the agricultural films of Examples 1 to 14 and Comparative Example 1 were observed. As a result, no bloom was observed on the surfaces of the agricultural films of Examples 1 to 14, but bloom was observed on the surfaces of the agricultural film of Comparative Example 1.
Therefore, in the agricultural film of Comparative Example 1, it is presumed that the haze value was increased due to the bloom from the layer containing the hindered amine light stabilizer and the benzoate compound.
It was shown that the agricultural films of Examples 1 to 14 had excellent long-term weather resistance as compared with Comparative Examples 2 and 3 and had excellent transparency as compared with Comparative Example 1. Such agricultural films are suitable as members used for growing agricultural crops or plants, and can be used particularly as materials for greenhouses.
In addition, the ability of the agricultural film to suppress sulfur absorption can be improved by appropriately blending the hindered amine light stabilizer and the benzoate compound. Therefore, the agricultural films of the Examples can be suitably used for sulfur fumigation/sulfur spraying or the like carried out in a case of growing plants or agricultural crops.
This application claims the priority on the basis of Japanese Patent Application No. 2019-147141 filed on August 9, 2019, the disclosure of which is incorporated by reference herein in its entirety.

EXPLANATION OF REFERENCES

| | |
|---|---|
| 10 | weather resistant layer |
| 20 | base layer |
| 100 | agricultural film |
| 200 | fumigation equipment |
| 210 | vinyl greenhouse |
| 212 | top surface |
| 214 | bottom surface |
| 220 | stirrer |
| 230 | hot plate |
| 240 | tray |
| 250 | test specimen |
| 250 | tray |
| 260 | sulfur |

## Claims

1. An agricultural film for use in sulfur fumigation or sulfur spraying, the agricultural film comprising a weather resistant layer containing:

   one or two or more hindered amine light stabilizers selected from the group consisting of a compound represented by General Formula (A1) and a compound represented by General Formula (A2),
   one or two or more benzoate compounds selected from compounds represented by General Formula (B),
   an ultraviolet absorber including one or two or more selected from the group consisting of a benzophenone-based ultraviolet absorber, a benzotriazole-based ultraviolet absorber, and a triazine-based ultraviolet absorber, and
   a thermoplastic resin,
   wherein X and Y satisfy $1.5/8.5 \leq X/Y \leq 9.5/0.5$, in a case where a content of the hindered amine light stabilizer in terms of mass in the weather resistant layer is defined as X and a content of the benzoate compound in terms of mass in the weather resistant layer is defined as Y,

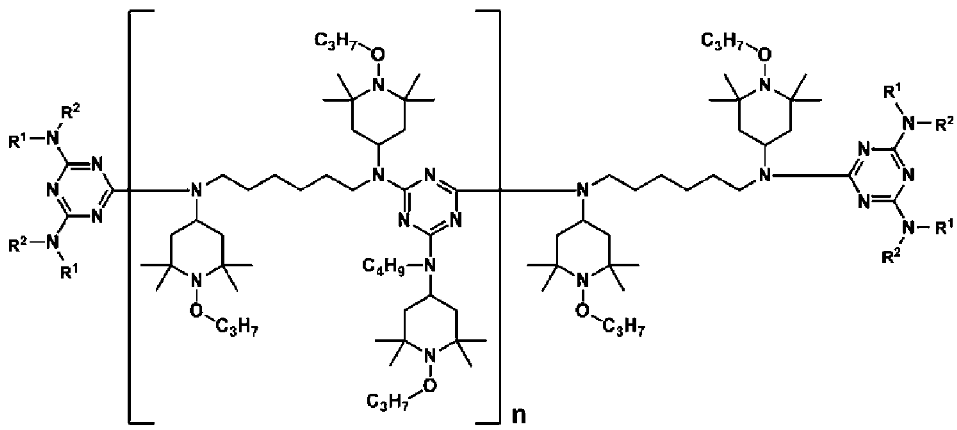
(A1)

(in General Formula (A1) , $R^1$ and $R^2$ may be the same or different from each other and each independently represent an alkyl group having 1 to 8 carbon atoms or a 1-(n-propoxy)-2,2,6,6-tetramethylpiperidin-4-yl group, and in General Formula (A1), n is an integer of zero or more),

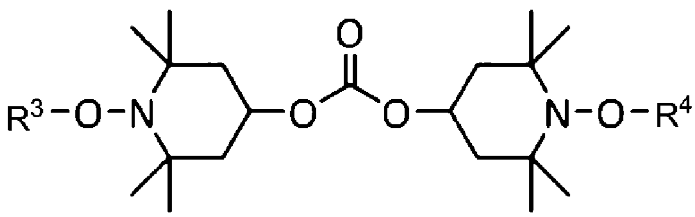
(A2)

(in General Formula (A2), $R^3$ and $R^4$ may be the same or different from each other and each independently represent an alkyl group having 1 to 20 carbon atoms),

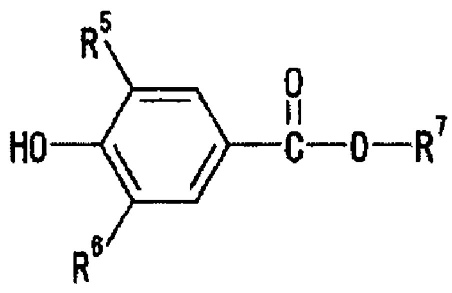
(B)

(in General Formula (B), $R^5$ and $R^6$ may be the same or different from each other and each independently represent

an alkyl group having 1 to 8 carbon atoms, and $R^7$ represents an alkyl group having 1 to 30 carbon atoms, an aryl group having 6 to 30 carbon atoms, or an alkylaryl group having 7 to 30 carbon atoms).

2. The agricultural film according to claim 1, wherein the hindered amine light stabilizer includes one or two or more selected from the group consisting of the following compound A1, compound A2, and compound A3.

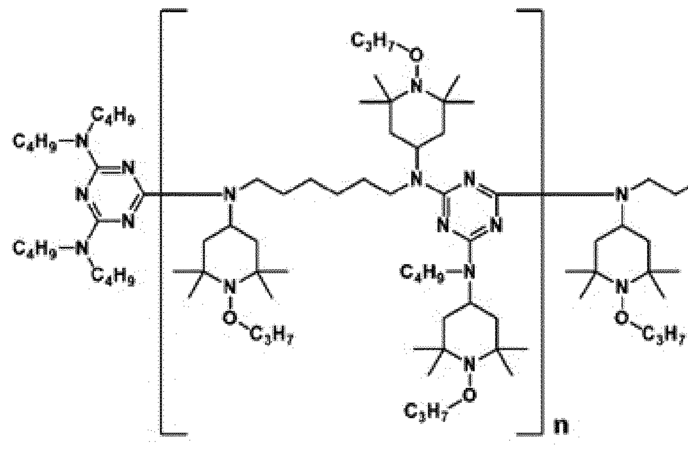

Compound A1

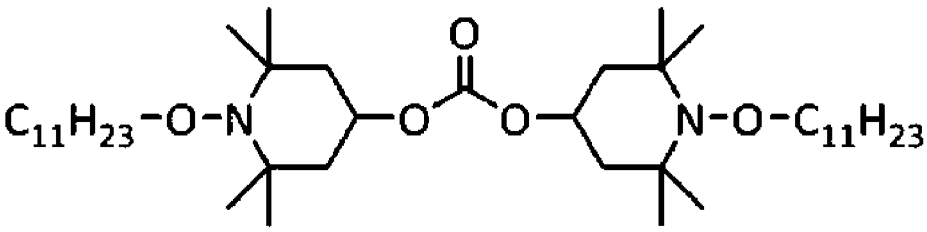

Compound A2

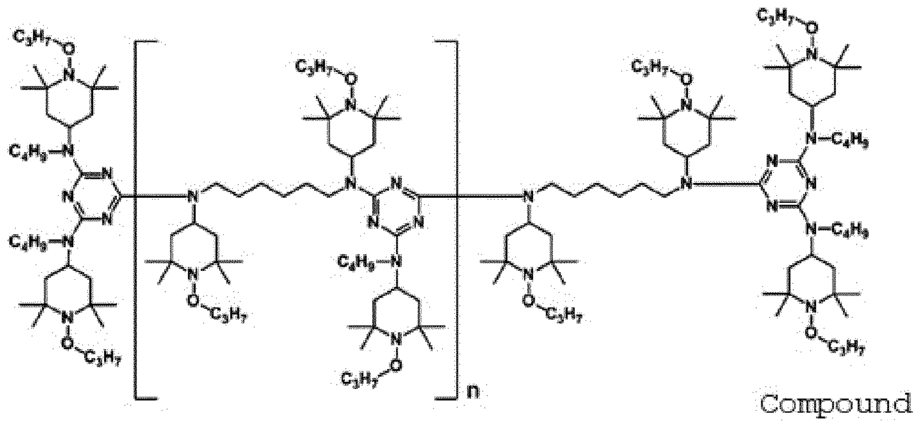

Compound A3

3. The agricultural film according to claim 1 or 2, wherein the benzoate compound represented by General Formula (B) includes at least one of the following compound B1 or compound B2.

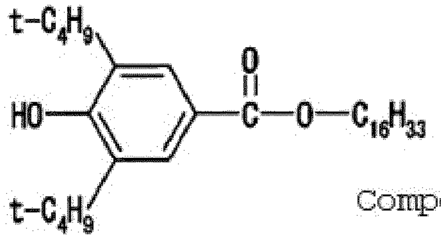

Compound B1

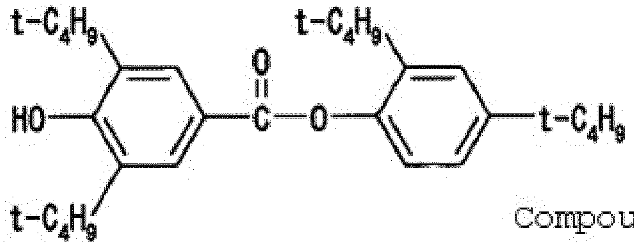

Compound B2

**4.** The agricultural film according to any one of claims 1 to 3,
wherein a content of the ultraviolet absorber is equal to or more than 0.01% by mass and equal to or less than 1% by mass with respect to 100% by mass of the thermoplastic resin.

**5.** The agricultural film according to any one of claims 1 to 4,
wherein a total content of the hindered amine light stabilizer and the benzoate compound is equal to or more than 0.01% by mass and equal to or less than 10% by mass with respect to 100% by mass of the thermoplastic resin.

**6.** The agricultural film according to any one of claims 1 to 5, comprising:
a multilayer structure including the weather resistant layer and another layer containing a thermoplastic resin.

**7.** The agricultural film according to any one of claims 1 to 6,
wherein the thermoplastic resin includes linear low density polyethylene or low density polyethylene.

**8.** The agricultural film according to any one of claims 1 to 7, wherein the agricultural film is used for forming a greenhouse.

**9.** A resin composition for forming an agricultural film, which is used for forming the agricultural film according to any one of claims 1 to 8, the resin composition comprising:

one or two or more hindered amine light stabilizers selected from the group consisting of the compound represented by General Formula (A1) and the compound represented by General Formula (A2);
one or two or more benzoate compounds selected from the compounds represented by General Formula (B);
an ultraviolet absorber including one or two or more selected from the group consisting of a benzophenone-based ultraviolet absorber, a benzotriazole-based ultraviolet absorber, and a triazine-based ultraviolet absorber, and
a thermoplastic resin,
wherein X and Y satisfy $1.5/8.5 \leq X/Y \leq 9.5/0.5$, in a case where the content of the hindered amine light stabilizer in terms of mass is defined as X and the content of the benzoate compound in terms of mass is defined as Y.

**10.** A method for growing a plant, comprising:

a step of disposing the agricultural film according to any one of claims 1 to 8 in a greenhouse;
a step of disposing a plant in the greenhouse; and
a step of carrying out sulfur fumigation in the greenhouse.

Fig.1(A)

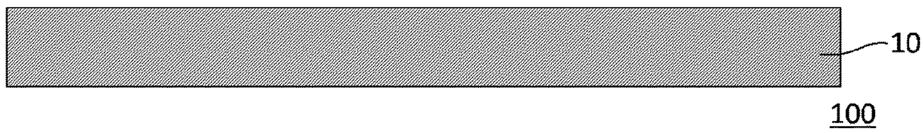


Fig.1(B)

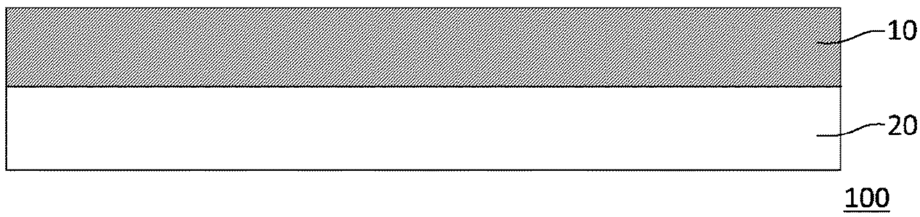


Fig.2

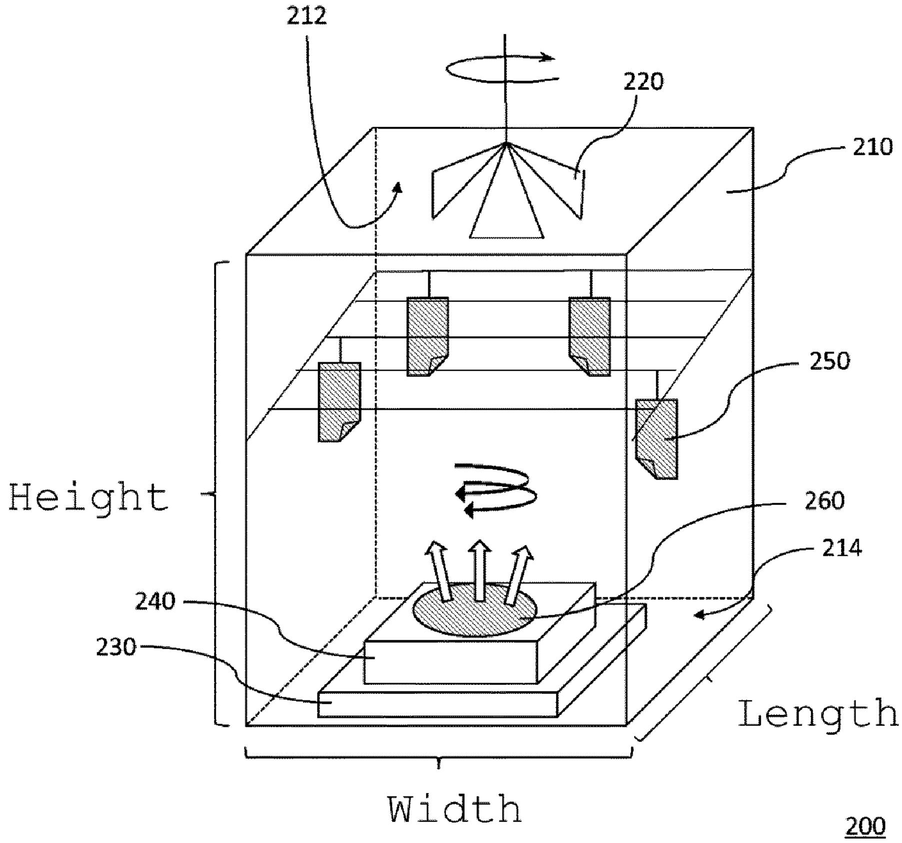

## INTERNATIONAL SEARCH REPORT

International application No. PCT/JP2020/024390

A. CLASSIFICATION OF SUBJECT MATTER

Int.Cl. B32B27/18(2006.01)i, B32B27/32(2006.01)i, C08K5/07(2006.01)i, C08K5/134(2006.01)i, C08K5/3435(2006.01)i, C08K5/3475(2006.01)i, C08K5/3492(2006.01)i, C08L23/04(2006.01)i, C08L101/00(2006.01)i, A01G9/14(2006.01)i, A01G13/02(2006.01)i

FI: A01G9/14S, A01G13/02B, C08L101/00, C08K5/3492, C08K5/3435, C08K5/134, C08K5/07, C08K5/3475, C08L23/04, B32B27/18A, B32B27/32E

According to International Patent Classification (IPC) or to both national classification and IPC

B. FIELDS SEARCHED

Minimum documentation searched (classification system followed by classification symbols)

Int.Cl. A01G9/14-9/26, 11/00-15/00, B32B1/00-43/00, C08K5/07, C08K5/134, C08K5/3435, C08K5/3475, C08K5/3492, C08L23/04, C08L101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P, X | JP 6630461 B1 (ADEKA CORPORATION) 15.01.2020 (2020-01-15), claims 1-8, paragraphs [0031], [0096] | 1-10 |
| A | JP 9-25369 A (ASAHI DENKA KOGYO KK) 28.01.1997 (1997-01-28), paragraphs [0006], [0007], [0020]-[0034] | 1-10 |
| A | JP 10-195258 A (ASAHI DENKA KOGYO KK) 28.07.1998 (1998-07-28), paragraphs [0007], [0010]-[0037] | 1-10 |
| A | JP 2001-139821 A (ASAHI DENKA KOGYO KK) 22.05.2001 (2001-05-22), paragraphs [0028]-[0031] | 1-10 |
| A | JP 2001-226600 A (ASAHI DENKA KOGYO KK) 21.08.2001 (2001-08-21), paragraphs [0012], [0053] | 1-10 |

☒ Further documents are listed in the continuation of Box C.  ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| | |
|---|---|
| Date of the actual completion of the international search<br>14.08.2020 | Date of mailing of the international search report<br>08.09.2020 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

International application No.
PCT/JP2020/024390

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-286412 A (ASAHI DENKA KOGYO KK) 10.10.2003 (2003-10-10), paragraphs [0037], [0038] | 1-10 |
| A | JP 7-188473 A (MITSUI PETROCHEMICAL INDUSTRIES, LTD.) 25.07.1995 (1995-07-25), paragraphs [0013], [0017]-[0027] | 1-10 |
| A | JP 10-219004 A (ASAHI DENKA KOGYO KK) 18.08.1998 (1998-08-18), paragraphs [0022]-[0030] | 1-10 |
| A | JP 2000-139238 A (MIKADO KAKO KK) 23.05.2000 (2000-05-23), paragraphs [0015]-[0032] | 10 |

Form PCT/ISA/210 (second sheet) (January 2015)

**INTERNATIONAL SEARCH REPORT**
Information on patent family members

International application No.
PCT/JP2020/024390

| | | |
|---|---|---|
| JP 6630461 B1 | 15.01.2020 | (Family: none) |
| JP 9-25369 A | 28.01.1997 | (Family: none) |
| JP 10-195258 A | 28.07.1998 | (Family: none) |
| JP 2001-139821 A | 22.05.2001 | US 6555603 B1<br>column 6, line 34 to column 7, line 40<br>WO 2001/034708 A1<br>EP 1156083 A1<br>CN 1336946 A<br>KR 10-0670468 B1 |
| JP 2001-226600 A | 21.08.2001 | (Family: none) |
| JP 2003-286412 A | 10.10.2003 | (Family: none) |
| JP 7-188473 A | 25.07.1995 | (Family: none) |
| JP 10-219004 A | 18.08.1998 | (Family: none) |
| JP 2000-139238 A | 23.05.2000 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015198579 A
- JP 2019147141 A